# EUROPÄISCHE PATENTSCHRIFT

(11) **EP 3 051 995 B1**
(45) Veröffentlichungstag und Bekanntmachung des Hinweises auf die Patenterteilung: **14.11.2018**
(21) Anmeldenummer: 14777089.5
(22) Anmeldetag: 29.09.2014
(51) Int. Cl.: A47L 15/46, G06F 3/14, G06F 3/16, G06F 3/01, A47L 15/00, A47L 15/42

(54) **GESCHIRRSPÜLMASCHINE UND VERFAHREN ZUR REINIGUNG VON SPÜLGUT**
DISHWASHER AND METHOD FOR CLEANING ITEMS TO BE WASHED
LAVE-VAISSELLE ET PROCÉDÉ DE NETTOYAGE D'ARTICLES À LAVER

(30) Priorität: 30.09.2013 DE 102013219700
(43) Veröffentlichungstag der Anmeldung: 10.08.2016
(73) Patentinhaber: MEIKO Maschinenbau GmbH & Co. KG, 77652 Offenburg (DE)
(72) Erfinder: PEUKERT, Thomas, 77815 Bühl (Baden) (DE)
(74) Vertreter: Herzog, Fiesser & Partner Patentanwälte PartG mbB
(86) Internationale Anmeldenummer: PCT/EP2014/070761
(87) Internationale Veröffentlichungsnummer: WO 2015/044409

(56) Entgegenhaltungen:
- EP-A2- 2 420 175
- DE-A1-102008 006 352
- DE-A1-102008 044 952
- DE-A1-102011 053 666

## Beschreibung

### Gebiet der Erfindung

Die Erfindung betrifft eine Geschirrspülmaschine und ein Verfahren zur Reinigung von Spülgut. Derartige Geschirrspülmaschinen und Verfahren zur Reinigung von Spülgut können insbesondere im Bereich gewerblicher Großküchen eingesetzt werden, beispielsweise in Kantinen in Schulen, Universitäten, Betrieben, Krankenhäusern und Pflegeeinrichtungen, Behörden oder anderen Einrichtungen, in welchen innerhalb kurzer Zeit eine große Anzahl an Personen versorgt werden muss. Auch andere Einrichtungen sind jedoch grundsätzlich denkbar.

### Stand der Technik

Aus dem Stand der Technik sind eine Vielzahl von Reinigungsvorrichtungen zur Reinigung unterschiedlicher Arten von Spülgut bekannt. Beispielsweise sind derartige Reinigungsvorrichtungen aus DE 10 2004 056 052 A1, DE 10 2006 050 876 A1 oder DE 10 2006 039 434 A1 bekannt.

Die vorliegende Erfindung betrifft insbesondere Geschirrspülmaschinen mit stationärem Spülverfahren, bei welchen Spülgut in Form von Geschirr in einer Reinigungskammer gereinigt wird. Derartige Geschirrspülmaschinen mit stationärem Spülverfahren führen in der Regel einen Gesamtprozess aus, bei welchem ein oder mehrere Reinigungsprogramme durchführbar sind. Ein derartiges Reinigungsprogramm besteht in vielen Fällen aus einem oder mehreren Spülschritten, bei welchen das Spülgut mit einer Spülflüssigkeit, beispielsweise einer Reinigerlösung, beaufschlagt wird, gefolgt von einem Abtropfen und mindestens einem Klarspülschritt, beispielsweise einem Klarspülschritt mit Frischwasser. Optional kann sich ein Trocknungsschritt anschließen. Das Reinigungsprogramm kann weiterhin eine Beaufschlagung des Spülguts mit bestimmten Chemikalien umfassen, beispielsweise Säuren, Laugen oder Desinfektionsmitteln.

Unterschiedliche Prozesse werden in derartigen Geschirrspülmaschinen als Reinigungsprogramme definiert und sind in der Regel in einer Steuerung der Geschirrspülmaschine hinterlegt und können vom Benutzer entsprechend ausgewählt werden. Ein derartiges Reinigungsprogramm beschreibt in der Regel jeweils einen Prozess, der aus Einzelschritten besteht und welcher in der Regel vollständig durchlaufen wird. Nach Durchlaufen des Reinigungsprogramms wird dann das Spülgut der Geschirrspülmaschine entnommen. Die Geschirrspülmaschine kann dann erneut mit Spülgut beschickt werden, um, auf Anforderung durch einen Benutzer, ein neues Reinigungsprogramm zu starten.

Nachteilig an bekannten Verfahren und Geschirrspülmaschinen mit stationärem Spülverfahren, insbesondere im Bereich der Spültechnik für Gläser, ist jedoch, dass das Reinigungs- und Trocknungsergebnis stark von der Art der Benutzung der Geschirrspülmaschine abhängig sein kann. Insbesondere kann ein Trocknungsergebnis, beispielsweise bei Gläsern, stark davon abhängig sein, wie lange das Spülgut, insbesondere die Gläser, nach Beendigung des Reinigungsprogramms in der Geschirrspülmaschine verbleibt. Unmittelbar nach Beendigung der Klarspülung, beispielsweise der Frischwasserklarspülung, sind durch die Effekte des in der Regel der Klarspülflüssigkeit beigemengten Klarspülers und/oder durch eine entsprechende Temperatur des Spülguts optimale Bedingungen für die Trocknung gegeben. Bei einer zeitnahen Entnahme aus der Geschirrspülmaschine kann ein gutes Trocknungsergebnis erzielt werden, da ein dünner und gleichmäßiger Film der Klarspülflüssigkeit auf dem Spülgut zum großen Teil ablaufen kann und die Reste der Klarspülflüssigkeit problemlos verdunsten können. Ein vergleichbarer Effekt kann erzielt werden, wenn nach dem Klarspülschritt direkt eine Trocknung in der Maschine aktiviert wird, beispielsweise durch eine Zuführung von Frischluft. In der Praxis tritt ein optimales Trocknungsergebnis jedoch sehr oft nicht ein.

Wie im Rahmen der vorliegenden Erfindung erkannt wurde, kann eine Ursache hierfür in vielen Fällen sein, dass das Spülgut nicht zum richtigen Zeitpunkt aus der Geschirrspülmaschine entnommen wird oder zu lange in der Geschirrspülmaschine verbleibt. Eine im Rahmen der vorliegenden Erfindung erkannte Erfahrungsgröße für eine maximale Verweildauer in der Geschirrspülmaschine liegt bei ca. 2 Minuten. Nach Ablauf dieser Zeit bildet sich, wenn das Spülgut noch in der Geschirrspülmaschine verbleibt, aufgrund einer Kondensation von aus dem Waschtank aufsteigendem Wrasen, Kondensat auf dem Spülgut, beispielsweise im Inneren der Gläser. Der kondensierende Wrasen enthält jedoch keinen Klarspüler und kein Netzmittel und schlägt sich daher in der Regel als Tropfen auf dem Spülgut nieder. Solch eine Benetzung von Gläsern mit reinem Wasser ohne Detergenzien kann Glaskorrosion verursachen, besonders wenn der Zustand einige Zeit andauert. Gleichzeitig kann der Wrasen auch Bestandteile der Reinigerlösung und/oder andere Verunreinigungen enthalten, die zumindest teilweise Abdampfrückstände auf dem Spülgut erzeugen können. Eine Konsequenz kann darin bestehen, dass das Spülgut, insbesondere Gläser, nach Entnahme nicht mehr optimal trocknet. Einerseits können die Tropfen auf dem Spülgut eine derartige Größe erreichen, dass eine Eigenwärme des Spülguts ein Abtrocknen nicht ermöglicht. Andererseits werden Rückstände sichtbar, die das Reinigungsergebnis zumindest optisch entwerten, aber auch hygienisch in Frage stellen können.

In der Praxis behilft sich ein Betreiber der Geschirrspülmaschine in der Regel dadurch, dass das Spülgut nachpoliert wird, sobald dieses aus der Geschirrspülmaschine entnommen wurde. In besonders schwerwiegenden Fällen kann der Spülprozess auch erneut gestartet werden. Beides erfordert jedoch einen entsprechend erhöhten Aufwand, also einen erhöhten Arbeitsaufwand sowie auch einen erhöhten Verbrauch an Verbrauchsmitteln und Energie.

Aus DE 10 2010 039 611 A1 ist eine Geschirrspülmaschine mit einer Steuereinrichtung bekannt, wobei eine Bedieneinrichtung vorgesehen ist. Über diese ist mindestens ein Bedienbefehl zum Ausführen eines oder mehrerer Anpassungsmaßnahmen an wenigstens einem der Spülprogramme eingebbar. Hintergrund ist, dass in der Praxis sich widersprechende Anforderungen an eine Geschirrspülmaschine bestehen, wie beispielsweise hohe Reinigungswirkung und hohe Trocknungswirkung. Zudem sollen Flecken am gereinigten Spülgut vermieden werden. Mittels des Bedienbefehls können eine oder mehrere Anpassungsmaßnahmen an einem der Spülprogramme eingebbar sein, wobei verschiedene Anpassungsmaßnahmen beschrieben werden. Unter anderem werden eine Durchführung wenigstens eines zusätzlichen Zwischenspülgangs oder eine Erhöhung einer Menge einer in einem als Klarspülgang vorgesehenen Teilspülgang verwendeten Spülflüssigkeit beschrieben.

Aus DE 10 2011 053 666 A1 ist ein Geschirrspüler mit einem Filtersystem bekannt, mit dem Schmutz aus der umgewälzten Flüssigkeit abtrennbar ist. Weiterhin ist ein Heizelement zum pyrolytischen Reinigen des Filtersystems von Schmutz vorgesehen. Es wird die Verwendung einer Klarspülphase und einer anschließenden Trockenphase beschrieben. Unter anderem wird dabei beschrieben, dass die Trockenbedingungen für die Trockenphase von einem Benutzer an einer Benutzerschnittstelle einstellbar sind.

EP 2 420 175 A2 beziehungsweise DE 10 2010 039 611 A1 beschreibt eine Geschirrspülmaschine, insbesondere eine Haushaltsgeschirrspülmaschine, mit einer Steuereinrichtung, bei der wenigstens ein Spülprogramm zur Ausführung eines mehrere Teilspülgänge umfassenden Spülgangs zum Reinigen und/oder Trocknen von Spülgut hinterlegt ist. Die Geschirrspülmaschine umfasst weiterhin eine Bedieneinrichtung zur Eingabe von Bedienbefehlen für die Steuereinrichtung, wobei an der Bedieneinrichtung wenigstens ein Bedienbefehl zum Ausführen einer oder mehrerer Anpassungsmaßnahmen an wenigstens einem der Spülprogramme eingebbar ist, so dass die Vermeidung von Flecken am Spülgut und/oder das Trocknungsergebnis am Spülgut bei der Durchführung des Spülgangs auf der Basis des angepassten Spülprogramms verbessert ist.

DE 10 2008 006352 A1 beschreibt eine Geschirrspülmaschine, insbesondere Haushalts-Geschirrspülmaschine, die wenigstens zwei Reinigungsprogramme zum Reinigen von Spülgut aufweist, die je wenigstens einen Reinigungsschritt und einen Klarspülschritt umfassen. Die Geschirrspülmaschine heizt in wenigstens zwei Klarspülschritten der wenigstens zwei Reinigungsprogramme Klarspülflüssigkeit auf eine im Wesentlichen gleich hohe Maximaltemperatur auf.

DE 10 2008 044952 A1 beschreibt eine Spülmaschine in Form eines Programmautomaten zur maschinellen Grundreinigung von Spülgut sowie ein entsprechendes Verfahren zum Reinigen von Spülgut. Das Verfahren umfasst eine Reinigungsphase, bei welcher eine Reinigungsflüssigkeit aus einem Tank mittels einer Pumpe durch ein Leitungssystem in eine Behandlungskammer gesprüht wird und von der Behandlungskammer durch Schwerkraft in den Tank zurückfließen kann, und eine Klarspülphase, bei welcher Frischwasser als Klarspülflüssigkeit mittels einer Klarspülpumpe durch ein Klarspülleitungssystem in die Behandlungskammer gesprüht wird und von der Behandlungskammer durch Schwerkraft in den Tank fließen kann. Weiterhin ist vorgesehen, dass in Abhängigkeit davon, ob eine Standardreinigung oder eine Grundreinigung des Spülguts durchzuführen ist, automatisch die Behandlungsparameter der Reinigungsphase und die Behandlungsparameter der Klarspülphase aufeinander angepasst eingestellt werden.

### Aufgabe der Erfindung

Es ist daher eine Aufgabe der vorliegenden Erfindung, eine Geschirrspülmaschine und ein Verfahren zur Reinigung von Spülgut bereitzustellen, welche die Nachteile bekannter Geschirrspülmaschinen und Reinigungsverfahren zumindest weitgehend vermeiden. Insbesondere sollen auch bei einer längeren Verweildauer des Spülguts in einer Reinigungskammer der Geschirrspülmaschine ein verbessertes Trocknungsergebnis und eine verbesserte Hygienisierung des Spülguts sichergestellt werden.

### Offenbarung der Erfindung

Diese Aufgabe wird gelöst durch eine Geschirrspülmaschine und ein Verfahren mit den Merkmalen der unabhängigen Patentansprüche. Vorteilhafte Weiterbildungen, welche einzeln oder in beliebiger Kombination realisierbar sind, sind in den abhängigen Ansprüchen dargestellt.

Im Folgenden werden die Begriffe "haben", "aufweisen", "umfassen" oder "einschließen" oder beliebige grammatikalische Abweichungen davon in nicht-ausschließlicher Weise verwendet. Dementsprechend können sich diese Begriffe sowohl auf Situationen beziehen, in welchen, neben den durch diese Begriffe eingeführten Merkmalen, keine weiteren Merkmale vorhanden sind, oder auf Situationen, in welchen ein oder mehrere weitere Merkmale vorhanden sind. Beispielsweise kann sich der Ausdruck "A hat B", "A weist B auf", "A umfasst B" oder "A schließt B ein" sowohl auf die Situation beziehen, in welcher, abgesehen von B, kein weiteres Element in A vorhanden ist (d.h. auf eine Situation, in welcher A ausschließlich aus B besteht), als auch auf die Situation, in welcher, zusätzlich zu B, ein oder mehrere weitere Elemente in A vorhanden sind, beispielsweise Element C, Elemente C und D oder sogar weitere Elemente.

Weiterhin werden im Folgenden die Begriffe "vorzugsweise", "insbesondere", "beispielsweise" oder ähnliche Begriffe in Verbindung mit optionalen Merkmalen verwendet, ohne dass alternative Ausführungsformen hierdurch beschränkt werden. So sind Merkmale, welche durch diese Begriffe eingeleitet werden, optionale Merkmale, und es ist nicht beabsichtigt, durch diese Merkmale den Schutzumfang der Ansprüche und insbesondere der unabhängigen Ansprüche einzuschränken. So kann die Erfindung, wie der Fachmann erkennen wird, auch unter Verwendung anderer Ausgestaltungen durchgeführt werden. In ähnlicher Weise werden Merkmale, welche durch "in einer Ausführungsform der Erfindung" oder durch "in einem Ausführungsbeispiel der Erfindung" eingeleitet werden, als optionale Merkmale verstanden, ohne dass hierdurch alternative Ausgestaltungen oder der Schutzumfang der unabhängigen Ansprüche eingeschränkt werden soll. Weiterhin sollen durch diese einleitenden Ausdrücke sämtliche Möglichkeiten, die hierdurch eingeleiteten Merkmale mit anderen Merkmalen zu kombinieren, seien es optionale oder nicht-optionale Merkmale, unangetastet bleiben.

In einem ersten Aspekt der vorliegenden Erfindung wird eine Geschirrspülmaschine vorgeschlagen. Unter einer Geschirrspülmaschine wird dabei allgemein eine Vorrichtung zur Reinigung von Spülgut verstanden, wobei das Spülgut gezielt mit einer oder mehreren Reinigungsfluiden, beispielsweise Spülflüssigkeit und/oder Klarspülflüssigkeit, beaufschlagt wird, vorzugsweise in einer Reinigungskammer. Das Spülgut soll dabei grundsätzlich beliebiges Gut sein, welches direkt oder indirekt zur Zubereitung, Aufbewahrung oder Darreichung von Speisen und/oder Getränken einsetzbar ist. Insbesondere kann es sich bei dem Spülgut um Geschirr und/oder Tabletts handeln. Exemplarisch können als Spülgut Teller, Tassen, Gläser, Krüge, Becher, Schalen, Schüsseln, Besteck, Tabletts, Töpfe, Pfannen oder Aufbewahrungsgefäße genannt werden. Auch andere Arten von Spülgut sind jedoch grundsätzlich denkbar. Die Geschirrspülmaschine kann insbesondere eine oder mehrere Halterungen zur Halterung des Spülguts während eines Reinigungsprozesses umfassen, beispielsweise einen oder mehrere Geschirrkörbe und/oder einen oder mehrere Gläserkörbe.

Die Geschirrspülmaschine umfasst eine Reinigungskammer zur Aufnahme des Spülguts. Unter einer Reinigungskammer wird dabei allgemein eine Kammer verstanden, welche von mindestens einem Gehäuse umgeben ist und welche vorzugsweise vollständig geschlossen ausgestaltet ist.

Die Reinigungskammer kann beispielsweise eine oder mehrere Öffnungsvorrichtungen aufweisen, welche im Folgenden, ohne Einschränkung möglicher Ausgestaltungen, als "Tür" bezeichnet werden. Im Rahmen der vorliegenden Erfindung ist also unter einer Tür eine grundsätzlich beliebige Vorrichtung zu verstehen, mittels derer die Reinigungskammer ganz oder teilweise geöffnet werden kann, beispielsweise um Spülgut in die Reinigungskammer einzubringen und/oder um Spülgut aus der Reinigungskammer zu entfernen. Die Tür kann beispielsweise in eine Wand der Reinigungskammer eingebracht sein oder kann selbst auch Bestandteil einer Wand der Reinigungskammer bilden, so dass die Reinigungskammer ganz oder teilweise aus der Tür gebildet wird. Die Tür kann insbesondere ausgewählt sein aus der Gruppe bestehend aus einer Klappe, einem Schieber, einem aufklappbaren Deckel und einer Haube. Auch Kombinationen verschiedener Arten von Türen sind möglich. Beispielsweise kann die Geschirrspülmaschine eine oder mehrere Türen in Form von Klappen und/oder eine oder mehrere Hauben umfassen. So kann es sich beispielsweise bei der Geschirrspülmaschine, wie unten noch näher ausgeführt wird, insbesondere um eine Einkammer-Geschirrspülmaschine handeln, welche beispielsweise als Frontlader mit einer frontseitigen Tür, als Toplader mit einer deckelseitigen Tür oder als Hauben-Geschirrspülmaschine ausgestaltet ist, wobei die Hauben-Geschirrspülmaschine eine Tür in Form einer auffahrbaren Haube zur Freigabe der Reinigungskammer aufweisen kann.

Die Geschirrspülmaschine ist eingerichtet, um das Spülgut in der Reinigungskammer mit mindestens einer Spülflüssigkeit und mindestens einer Klarspülflüssigkeit zu beaufschlagen. Spülflüssigkeit und Klarspülflüssigkeit sind Beispiele eines Reinigungsfluids zur Reinigung des Spülguts. Unter einer Spülflüssigkeit wird eine Flüssigkeit verstanden, welche während eines Grobreinigungsprozesses zum Abspülen von Verunreinigungen von dem Spülgut einsetzbar ist. Beispielsweise kann es sich hierbei um eine wässrige Spülflüssigkeit handeln, welche neben Wasser eine oder mehrere Reinigungschemikalien umfasst, beispielsweise mindestens eine Reinigerlösung. Zusätzlich können weitere Substanzen umfasst sein, wie beispielsweise Desinfektionsmittel. Unter einer Klarspülflüssigkeit wird im Rahmen der vorliegenden Erfindung eine Flüssigkeit verstanden, welche eingerichtet ist, um Reste der Spülflüssigkeit von dem Spülgut abzuspülen und eine rückstandsfreie Trocknung zu fördern. Die Klarspülflüssigkeit kann reines Wasser sein, beispielsweise Frischwasser und/oder eine wässrige Klarspülflüssigkeit mit einem oder mehreren Zusätzen, beispielsweise einem Zusatz mindestens eines Klarspülers, beispielsweise eines Netzmittels, welches ein rasches und rückstandsfreies Ablaufen der Klarspülflüssigkeit von dem Spülgut fördert. Reinigerlösungen und Klarspüler der genannten Art sind dem Fachmann auf dem Gebiet der Spültechnik geläufig und sind kommerziell verfügbar.

Die Spülflüssigkeit und/oder die Klarspülflüssigkeit können, wie weiter unten noch ausgeführt wird, insbesondere bei gegenüber der Raumtemperatur erhöhter Temperatur auf das Spülgut aufgebracht werden. Beispielsweise kann die Spülflüssigkeit eine Temperatur von 50 bis 80 °C aufweisen, und die Klarspülflüssigkeit kann beispielsweise eine Temperatur von 80 bis 95 °C aufweisen.

Zur Beaufschlagung des Spülguts mit dem Reinigungsfluid, also mit der Spülflüssigkeit und/oder der Klarspülflüssigkeit, kann die Geschirrspülmaschine insbesondere mindestens ein Düsensystem aufweisen, mit einer oder mehreren Düsen, aus welchen die Spülflüssigkeit und/oder die Klarspülflüssigkeit austritt und auf das Spülgut aufgebracht werden kann. Das Düsensystem kann beispielsweise mit mindestens einem Rohrleitungssystem verbunden sein, über welches die Spülflüssigkeit und/oder die Klarspülflüssigkeit zu dem Düsensystem gefördert werden, im Einfachbetrieb oder auch im Umwälzbetrieb. Dabei können für die Spülflüssigkeit und die Klarspülflüssigkeit dasselbe Düsensystem oder getrennte Düsensysteme verwendet werden.

Die Geschirrspülmaschine weist mindestens eine Steuerung auf. Unter einer Steuerung ist dabei im Rahmen der vorliegenden Erfindung allgemein eine Vorrichtung zu verstehen, welche eingerichtet ist, um einen oder mehrere mit der Reinigung des Spülguts im Zusammenhang stehende Prozesse der Geschirrspülmaschine zu steuern und/oder zu regeln. Beispielsweise kann die Steuerung mindestens eine Datenverarbeitungsvorrichtung aufweisen. Die Steuerung kann insbesondere zentral für die gesamte Geschirrspülmaschine eingerichtet sein und kann sämtliche Funktionen der Geschirrspülmaschine steuern. Alternativ ist jedoch auch eine dezentrale Steuerung mit mehreren einzelnen, miteinander kooperierenden Bestandteilen möglich. Die Steuerung kann weiterhin mindestens eine Benutzerschnittstelle aufweisen, beispielsweise mindestens eine Tastatur und/oder mindestens ein Display.

Die Steuerung ist eingerichtet, um mindestens ein Reinigungsprogramm durchzuführen. Unter einem Reinigungsprogramm wird dabei allgemein eine definierte oder definierbare Abfolge eines oder mehrerer Verfahrensschritte verstanden, die dem Zweck einer Reinigung des Spülguts dienen. Die Verfahrensschritte, im Folgenden auch als Reinigungsschritte und/oder Programmschritte bezeichnet, können beispielsweise durch ein Computerprogramm gesteuert werden, welches in einer Datenverarbeitungsvorrichtung der Steuerung abläuft. Die Steuerung kann zu diesem Zweck beispielsweise auf einen oder mehrere Aktoren einwirken, beispielsweise auf eine oder mehrere Pumpen und/oder auf ein oder mehrere Ventile und/oder auf eine oder mehrere Heizvorrichtungen, um zum richtigen und durch das Reinigungsprogramm vorgegebenen Zeitpunkt jeweils die korrekten Aktionen zur Durchführung des Reinigungsprogramms zu initiieren, beispielsweise einen Pumpenstart und/oder ein Öffnen und/oder Schließen von Ventilen. Derartige Reinigungsprogramme und die Steuerung derartiger Reinigungsprogramme sind dem Fachmann grundsätzlich bekannt. Insbesondere kann das Reinigungsprogramm derart durchgeführt werden, dass das Spülgut während sämtlicher Programmschritte des Reinigungsprogramms in derselben Reinigungskammer verbleibt. Letzteres wird in der Praxis auch als stationäres Spülverfahren bezeichnet.

Das Reinigungsprogramm umfasst mindestens einen Spülschritt, in welchem das Spülgut mit der Spülflüssigkeit beaufschlagt wird, und mindestens einen Klarspülschritt, in welchem das Spülgut mit der Klarspülflüssigkeit beaufschlagt wird. Die Beaufschlagung kann jeweils beispielsweise durch Besprühen, Betropfen, Bestrahlen oder eine andere Art der Beaufschlagung erfolgen, bei der das Spülgut mit der Spülflüssigkeit bzw. der Klarspülflüssigkeit in Kontakt gebracht wird. Vorzugsweise werden die genannten Programmschritte in der genannten Reihenfolge durchgeführt, so dass zunächst der Spülschritt durchgeführt wird, um anschließend, im unmittelbaren Anschluss oder nach einer Wartezeit, das Spülgut in dem Klarspülschritt mit der Klarspülflüssigkeit zu beaufschlagen. Dabei können ein einziger Spülschritt oder mehrere Spülschritte vorgesehen sein, beispielsweise um sequenziell zunächst grobe Verunreinigungen abzutragen und anschließend einen Feinabtrag von Verunreinigungen zu gewährleisten. Weiterhin können ein oder mehrere Klarspülschritte vorgesehen sein.

Das Reinigungsprogramm kann, wie unten noch näher ausgeführt wird, zusätzlich zu dem mindestens einen Spülschritt und dem mindestens einen Klarspülschritt einen oder mehrere zusätzliche Verfahrensschritte umfassen. So können beispielsweise, wie unten noch näher ausgeführt wird, ein oder mehrere Abtropfschritte umfasst sein, beispielsweise jeweils nach dem Spülschritt und/oder nach dem Klarspülschritt. Weiterhin können, alternativ oder zusätzlich, ein oder mehrere Trocknungsschritte umfasst sein, beispielsweise nach Durchführung des Spülschritts. Wiederum alternativ oder zusätzlich können ein oder mehrere zusätzliche Beaufschlagungsschritte erfolgen, in welchen das Spülgut beispielsweise zusätzlich mit konzentriertem Reiniger und/oder einem Desinfektionsmittel beaufschlagt wird, optional gefolgt von einem oder mehreren weiteren Spülschritten. Verschiedene Ausgestaltungen sind denkbar und dem Fachmann grundsätzlich bekannt.

Die Reinigungsvorrichtung weist mindestens ein durch einen Benutzer betätigbares Bedienelement auf. Das Bedienelement kann insbesondere Bestandteil der mindestens einen, oben aufgeführten optionalen Benutzerschnittstelle der Steuerung sein. Unter einem Bedienelement kann dabei grundsätzlich ein beliebiges Element verstanden werden, welches es einem Benutzer der Geschirrspülmaschine ermöglicht, eine oder mehrere Aktionen der Geschirrspülmaschine zu initiieren und/oder um einen oder mehrere Befehle oder eine oder mehrere Informationen an die Steuerung zu übergeben. Beispielsweise kann es sich bei dem Bedienelement um ein mechanisches und/oder elektromechanisches und/oder elektrisches Bedienelement handeln. Beispielsweise kann das Bedienelement mindestens ein Bedienelement aufweisen, ausgewählt aus der Gruppe bestehend aus: einer Tastatur, einem Schalter, einem Taster, einem Hebel, einem Druckknopf, einem Folientaster oder einer Kombination der genannten und/oder anderer Bedienelemente.

Wie oben ausgeführt, läuft bei herkömmlichen Geschirrspülmaschinen das Reinigungsprogramm nach einer Initiierung vollständig ab, einschließlich der oben beschriebenen Problematik einer möglichen Bildung von Rückständen auf dem Spülgut aufgrund einer verzögerten Entnahme des Spülguts aus der Reinigungskammer. Zur Behebung dieser Problematik wird vorgeschlagen, die Geschirrspülmaschine und die Steuerung derart einzurichten, dass der Klarspülschritt zumindest einmal aufgrund einer Betätigung des Bedienelements nach Durchführung zumindest des Spülschritts des Reinigungsprogramms durchführbar ist. Dementsprechend bietet die Geschirrspülmaschine die Möglichkeit, unbedingt oder zumindest wenn eine oder mehrere Bedingungen erfüllt sind, nach Durchführung zumindest des Spülschritts des Reinigungsprogramms das Bedienelement zu betätigen oder erneut zu betätigen, um den Klarspülschritt des Reinigungsprogramms erstmalig oder erneut durchzuführen.

Wie unten noch näher ausgeführt wird, kann die Betätigung des Bedienelements nach Durchführung zumindest des Spülschritts des Reinigungsprogramms freigeschaltet werden, bedingungslos oder wenn eine oder mehrere vorgegebene Bedingungen erfüllt sind. Beispielsweise kann diese Bedingung darin bestehen, dass das Spülgut nach Durchführung des Spülschritts und des Klarspülschritts sowie optional mindestens eines Trocknungsschritts nicht aus der Reinigungskammer entnommen wurde, sondern in der Reinigungskammer verblieben ist, beispielsweise für mindestens eine vorgegebene Zeitspanne. Ist die Bedingung erfüllt, so kann beispielsweise das Bedienelement freigeschaltet werden, um den Klarspülschritt zu initiieren oder erneut zu initiieren.

Der durch die Betätigung des Bedienelements initiierbare Klarspülschritt kann eine erstmalige Durchführung des Klarspülschritts des Reinigungsprogramms sein oder kann eine erneute Durchführung des Klarspülschritts sein. So kann beispielsweise das Reinigungsprogramm zunächst regulär ablaufen, einschließlich des mindestens einen Spülschritts und des mindestens einen Klarspülschritts, um dann, insbesondere wenn die mindestens eine Bedingung erfüllt ist, aufgrund einer Betätigung des Bedienelements erneut den mindestens einen Klarspülschritt durchzuführen. Alternativ kann jedoch der Klarspülschritt auch aufgrund der Betätigung des Bedienelements erstmalig durchgeführt werden. So kann beispielsweise nach Start des Reinigungsprogramms der mindestens eine Spülschritt durchgeführt werden, ohne dass sich zunächst der mindestens eine Klarspülschritt anschließt. Letzterer kann dann beispielsweise erst aufgrund der Betätigung des Bedienelements durch einen Benutzer gestartet werden. Wenn beispielsweise der Benutzer erkennt, dass er in naher Zukunft das Spülgut aus der Geschirrspülmaschine entnehmen will, so kann er das Bedienelement betätigen, und der Klarspülschritt wird gestartet, optional gefolgt von einem Trocknungsschritt. Der aufgrund der Betätigung des Bedienelements durchführbare Klarspülschritt kann Bestandteil des Reinigungsprogramms sein oder kann als zusätzlicher, optionaler Schritt angesehen werden.

Wie oben ausgeführt, kann das Reinigungsprogramm zusätzliche Programmschritte umfassen. So kann beispielsweise mindestens ein Trocknungsschritt umfasst sein. Wird der Klarspülschritt aufgrund der Betätigung des Bedienelements durchgeführt, so kann sich aufgrund dieser Betätigung des Bedienelements an den Klarspülschritt auch ein Trocknungsschritt oder ein weiterer Trocknungsschritt anschließen. Wiederum bestehen hierbei die beiden Möglichkeiten, dass zunächst das Reinigungsprogramm vollständig und einschließlich des dem Klarspülschritt nachgeschalteten Trocknungsschritts abläuft. Sind dann eine oder mehrere Bedingungen erfüllt und wird eine Betätigung des Bedienelements aufgrund der Erfüllung der einen oder mehreren Bedingungen ermöglicht, um den Klarspülschritt erneut durchzuführen, so kann sich an diesen erneuten Klarspülschritt wiederum mindestens ein Trocknungsschritt anschließen. Als alternative Ausgestaltung, bei welcher aufgrund der Betätigung des Bedienelements der Klarspülschritt erstmalig durchgeführt wird, kann sich der Trocknungsschritt an diesen Klarspülschritt erstmalig anschließen.
Wie oben ausgeführt, kann die Steuerung also eingerichtet sein, um das Reinigungsprogramm zunächst vollständig und einschließlich des Spülschritts und des Klarspülschritts durchzuführen. Anschließend kann mindestens eine erneute Durchführung des Klarspülschritts und optional des Trocknungsschritts aufgrund der Betätigung des Bedienelements durchgeführt werden. Dementsprechend kann beispielsweise das Bedienelement nach vollständiger Durchführung des Reinigungsprogramms einschließlich des Spülschritts und des Klarspülschritts freigeschaltet werden, um eine erneute Durchführung des Klarspülschritts und optional des Trocknungsschritts, initiiert durch einen Benutzer mittels Betätigung des Bedienelements, zu ermöglichen. Wie oben ausgeführt, kann dieses Freischalten des Bedienelements abhängig gemacht werden von einer oder mehreren Bedingungen, wie beispielsweise einer Verweildauer des Spülguts in der Reinigungskammer für mindestens eine vorgegebene Zeit oder für mehr als eine vorgegebene Zeitdauer.

Die Steuerung kann dementsprechend eingerichtet sein, um zu erkennen, ob mindestens eine vorgegebene oder vorgebbare Bedingung erfüllt ist, und kann eingerichtet sein, um ein Freischalten des Bedienelements von einer Erfüllung dieser mindestens einen Bedingung abhängig zu machen. Beispielsweise kann die Steuerung eingerichtet sein, um zu erkennen, ob das Spülgut nach Durchführung des Reinigungsprogramms, einschließlich des Spülschritts und des Klarspülschritts sowie optional eines Trocknungsschritts, für mehr als eine vorgegebene Zeitdauer in der Reinigungskammer verblieben ist. Beispielsweise kann ein Zeitpunkt, zu dem der mindestens eine Klarspülschritt des abgelaufenen Reinigungsprogramms oder, falls vorhanden, ein anschließender Abtropfschritt oder ein anschließender Trocknungsschritt, abgelaufen ist, als Programmende-Zeitpunkt definiert werden. Ab diesem Programmende-Zeitpunkt kann dann die Zeitdauer erfasst werden, welche verstreicht oder verstrichen ist, ohne dass das Spülgut aus der Reinigungskammer entnommen wurde, und diese Zeitdauer kann mit der vorgegebenen Zeitdauer als Schwellwert verglichen werden, um zu überprüfen, ob die Bedingung für die Freischaltung des Bedienelements erfüllt ist oder nicht. Die Steuerung kann dementsprechend eingerichtet sein, um bei Erkennung dieser Bedingung, also bei Erkennung des Erfülltseins dieser Bedingung, die erneute Durchführung des Klarspülschritts sowie optional des Trocknungsschritts aufgrund der Betätigung des Bedienelements zu ermöglichen. In anderen Worten kann das Bedienelement in Abhängigkeit von einem Erfülltsein dieser Bedingung freigeschaltet werden.

Die vorgegebene Zeitdauer kann also ein zeitlicher Schwellwert sein. Eine Verweildauer des Spülguts nach Durchführung des Reinigungsprogramms kann erfasst werden, beispielsweise indem erfasst wird, ob eine Tür der Reinigungsvorrichtung geöffnet wurde, in einer Weise, die eine Entnahme des Spülguts aus der Reinigungskammer ermöglicht. Alternativ oder zusätzlich können ein oder mehrere Sensoren vorgesehen sein, welche erkennen, ob Spülgut in der Reinigungskammer vorgesehen ist. Beispielsweise kann es sich hierbei um optische Sensoren wie beispielsweise Lichtschranken, Kameras mit Bilderkennung oder andere Arten von Sensoren handeln, welche einfach oder mehrfach vorgesehen sein können und welche erkennen können, ob Spülgut in der Reinigungskammer ist oder nicht. Dementsprechend kann die Zeitdauer nach Beendigung des Reinigungsprogramms erfasst werden und mit einem oder mehreren Schwellwerten verglichen werden, nämlich mit der mindestens einen vorgegebenen Zeitdauer. Diese Zeitdauer, welche als Schwellwert fungieren kann, kann beispielsweise in einem Bereich von 1 Minute bis 15 Minuten liegen. Beispielsweise kann der Schwellwert eine Zeitdauer von 2 Minuten sein.

Wie oben ausgeführt, kann die Erkennung der Bedingung, dass das Spülgut nach Durchführung des Reinigungsprogramms für mehr als die vorgegebene Zeitdauer in der Reinigungskammer verblieben ist, auf verschiedene Weisen erfolgen. So kann beispielsweise mindestens ein Sensor verwendet werden. Alternativ oder zusätzlich kann die Reinigungsvorrichtung, insbesondere die Steuerung, auch eingerichtet sein, um eine Öffnung einer Tür der Reinigungsvorrichtung zu erkennen. So kann beispielsweise die Steuerung eingerichtet sein, um eine Zeitdauer einer Öffnung der Tür mit mindestens einem Schwellwert zu vergleichen, wobei dieser Schwellwert beispielsweise einen Erfahrungswert hinsichtlich einer Mindestdauer für eine Entnahme des Spülguts aus der Reinigungskammer darstellen kann. Bei Überschreiten des Schwellwerts kann dann beispielsweise auf eine Entnahme des Spülguts aus der Reinigungskammer geschlossen werden. Wurde keine derartige Entnahme festgestellt, beispielsweise nach Verstreichen der oben genannten Zeitdauer, so kann beispielsweise ein Freischalten des Bedienelements zur Durchführung des Klarspülschritts, insbesondere zur erneuten Durchführung des Klarspülschritts, einschließlich optional mindestens eines anschließenden Trocknungsschritts, erfolgen. Der Schwellwert, welcher eine Mindestzeitdauer für eine Entnahme des Spülguts aus der Reinigungskammer beinhalten kann, kann beispielsweise in einem Bereich von 1 Sekunde bis 10 Sekunden liegen, beispielsweise bei in einem Bereich von 2 Sekunden bis 8 Sekunden.

Die Reinigungsvorrichtung kann insbesondere, wie oben ausgeführt, mindestens einen Sensor zur Erfassung mindestens eines Zustands des Spülguts und/oder der Geschirrspülmaschine aufweisen. Die Steuerung kann eingerichtet sein, um die erneute Durchführung des Klarspülschritts aufgrund der Betätigung des Bedienelements durch einen Benutzer in Abhängigkeit von dem erfassten Zustand zu ermöglichen. Bei dem erfassten Zustand kann es sich beispielsweise um eine Beladung der Geschirrspülmaschine mit dem Spülgut handeln. Auf diese Weise kann mittels des mindestens einen Sensors beispielsweise festgestellt werden, ob das Spülgut in der Reinigungskammer verblieben ist. Dies kann mit der oben genannten Schwellwertmethode kombiniert werden, bei welcher eine Verweildauer des Spülguts in der Reinigungskammer nach Durchführung des Reinigungsprogramms durch den mindestens einen Sensor erfasst und mit mindestens einem Schwellwert in Form der vorgegebenen Zeitdauer verglichen wird. Die vorgegebene Zeitdauer kann beispielsweise, wie oben ausgeführt, im Bereich von 1 Minute bis 15 Minuten liegen, beispielsweise bei 2 Minuten oder 5 Minuten.

Die Steuerung kann allgemein eingerichtet sein, um das Bedienelement erst nach Durchführung des Spülschritts für die Betätigung freizuschalten. Beispielsweise kann diese Freischaltung, wie oben ausgeführt, nach vollständiger Durchführung des Reinigungsprogramms, einschließlich des Spülschritts und des Klarspülschritts sowie optional des mindestens einen Trocknungsschritts, erfolgen. Weiterhin kann die Freischaltung des Bedienelements, wie oben ausgeführt, von mindestens einer Bedingung abhängig gemacht werden, beispielsweise unter Verwendung des oben genannten Schwellwertverfahrens für die Verweildauer des Spülguts in der Reinigungskammer nach Durchführung des Spülprogramms.

Die Steuerung kann insbesondere eingerichtet sein, um einen freigeschalteten Zustand des Bedienelements durch mindestens ein Signal an einen Benutzer anzuzeigen. Das Signal kann insbesondere ausgewählt sein aus der Gruppe bestehend aus: einem optischen Signal, insbesondere einem Lichtsignal, einem Blinksignal, einem Farbwechsel oder einer auf einem Display ausgegebenen Information; einem akustischen Signal, beispielsweise einem Signalton; einem haptischen Signal, beispielsweise einem Vibrieren eines Griffs der Geschirrspülmaschine. So kann allgemein das Bedienelement vollständig oder teilweise als Signalelement ausgestaltet sein und kann eingerichtet sein, um das mindestens eine Signal an den Benutzer auszugeben.

Das Bedienelement kann beispielsweise einen durch einen Benutzer betätigbaren Programmstart-Schalter umfassen. Mittels dieses Programmstart-Schalters kann beispielsweise das Reinigungsprogramm gestartet werden. Der Programmstart-Schalter kann in Mehrfachfunktion weiterhin eingerichtet sein, um aufgrund einer erneuten Betätigung nach Durchführung zumindest des Spülschritts den Klarspülschritt zu starten, insbesondere erneut zu starten. Dementsprechend kann für den Start des Reinigungsprogramms sowie für den Start des Klarspülschritts, insbesondere des erneuten Klarspülschritts, derselbe Programmstart-Schalter verwendet werden, beispielsweise ein Programmstart-Taster.

So kann das Bedienelement allgemein eingerichtet sein, um mindestens eine Doppelfunktion zu erfüllen. Diese Doppelfunktion beinhaltet neben der Funktion eines Starts des Klarspülschritts, insbesondere eines erneuten Starts des Klarspülschritts, mindestens eine weitere Funktion, beispielsweise einen Programmstart des mindestens einen Reinigungsprogramms. Beispielsweise kann die Steuerung eingerichtet sein, um die Funktion des Bedienelements, bei welcher der Klarspülschritt aufgrund der Betätigung des Bedienelements nach Durchführung zumindest des Spülschritts des Reinigungsprogramms durchgeführt wird, lediglich freizuschalten, wenn mindestens eine Bedingung der Geschirrspülmaschine erfüllt ist, insbesondere die oben genannte zeitliche Bedingung hinsichtlich der Verweildauer des Spülguts in der Reinigungskammer nach Durchführung des Spülprogramms.

Allgemein kann die Geschirrspülmaschine, wie oben ausgeführt, eingerichtet sein, um dem Benutzer mindestens ein Signal zu übermitteln, welches anzeigt, dass aufgrund einer Betätigung des Bedienelements der Klarspülschritt durchführbar ist, insbesondere erneut durchführbar ist. Das Signal kann, wie oben ausgeführt, insbesondere ausgewählt sein aus einem akustischen Signal, einem optischen Signal und einem haptischen Signal.

Die Geschirrspülmaschine kann insbesondere eingerichtet sein, um wahlweise mehrere Reinigungsprogramme durchzuführen. So kann die Steuerung für die Durchführung mehrerer Reinigungsprogramme eingerichtet sein. Beispielsweise kann ein Benutzer der Geschirrspülmaschine mittels der mindestens einen optionalen Benutzerschnittstelle das durchzuführende Reinigungsprogramm aus einer Mehrzahl an Reinigungsprogrammen auswählen. Aus dieser Mehrzahl an Reinigungsprogrammen sollen mindestens zwei der Reinigungsprogramme jeweils den mindestens einen Spülschritt sowie den mindestens einen Klarspülschritt umfassen. Dabei soll die Steuerung derart eingerichtet sein, dass der Klarspülschritt mindestens eines der Reinigungsprogramme zumindest einmal aufgrund einer Betätigung des Bedienelements nach Durchführung des Spülschritts durchführbar ist, gemäß der obigen Beschreibung, wobei die Steuerung weiterhin derart eingerichtet ist, dass der Klarspülschritt mindestens eines zweiten der Reinigungsprogramme unabhängig von einer Betätigung des Bedienelements nach Durchführung des Spülschritts durchführbar ist. In anderen Worten soll mindestens ein erfindungsgemäßes Reinigungsprogramm vorgesehen sein, bei welchem die Steuerung derart eingerichtet ist, dass der Klarspülschritt zumindest einmal aufgrund einer Betätigung des Bedienelements nach Durchführung zumindest des Spülschritts durchführbar ist, sowie mindestens ein Reinigungsprogramm, welches nicht in dieser Weise ausgestaltet ist und bei welchem der Klarspülschritt unabhängig von einer Betätigung des Bedienelements nach Durchführung des Spülschritts ist.

Die Geschirrspülmaschine kann insbesondere mindestens einen mit der Reinigungskammer verbundenen Waschtank aufweisen. Beispielsweise kann dieser Waschtank im Boden der Reinigungskammer ausgebildet sein. Beispielsweise kann der mindestens eine Spülschritt im Umwälzbetrieb mit Spülflüssigkeit des Waschtanks durchgeführt werden, indem beispielsweise ein Rohrleitungssystem mit mindestens einer Pumpe und mindestens einem Düsensystem vorgesehen ist, welches mit dem Waschtank verbunden ist. Zusätzlich zu dem mindestens einen Waschtank kann die Geschirrspülmaschine optional weiterhin mindestens einen von dem Waschtank getrennt ausgebildeten Klarspültank aufweisen. In dem Klarspültank kann die Klarspülflüssigkeit, vorzugsweise unabhängig von in dem Waschtank befindlicher Flüssigkeit, aufbereitbar sein. Beispielsweise kann der Klarspültank über ein Rohrleitungssystem mit einem Düsensystem der Geschirrspülmaschine verbunden sein, wobei dieses Rohrleitungssystem, welches speziell für den Klarspülvorgang eingerichtet sein kann, beispielsweise wiederum eine Klarspülpumpe umfassen kann. Unter einer Aufbereitung der Klarspülflüssigkeit in dem Waschtank kann beispielsweise eine Erwärmung der Klarspülflüssigkeit verstanden werden und/oder eine Beimengung von einem oder mehreren Zusatzstoffen zu der Klarspülflüssigkeit, beispielsweise einem Netzmittel und/oder einem Klarspüler. Der Klarspültank kann insbesondere mindestens eine Heizvorrichtung zur Erwärmung der Klarspülflüssigkeit aufweisen, beispielsweise eine Heizvorrichtung ausgewählt aus einem Boiler und einem Durchlauferhitzer. Der Klarspültank kann beispielsweise über einen Frischwasseranschluss gespeist werden, welcher beispielsweise mit einem gebäudeseitigen Frischwasseranschluss verbindbar ist.

Der Klarspülschritt kann insbesondere einen Frischwasser-Klarspülschritt umfassen. Unter einem Frischwasser-Klarspülschritt ist dabei ein Klarspülschritt unter Verwendung von Frischwasser als Klarspülflüssigkeit zu verstehen. Dem Frischwasser können allerdings ein oder mehrere Zusatzstoffe beigemengt werden, beispielsweise ein Klarspüler. Weiterhin kann das Frischwasser auch erhitzt werden, beispielsweise mittels mindestens eines Boilers und/oder mittels mindestens eines Durchlauferhitzers.

Wie oben ausgeführt, kann die Geschirrspülmaschine insbesondere als gewerbliche Geschirrspülmaschine ausgestaltet sein, also als Geschirrspülmaschine, welche mindestens zwei Tanks aufweist, nämlich den mindestens einen Waschtank sowie weiterhin zumindest den Klarspültank. Auf diese Weise kann sichergestellt werden, dass die Aufbereitung der Klarspülflüssigkeit in dem Klarspültank unabhängig von einem Spülschritt erfolgt, der unter Verwendung des Waschtanks durchgeführt wird. Dementsprechend kann der Klarspülschritt unmittelbar im Anschluss an den Spülschritt durchgeführt werden, so dass ein schnellerer Zyklus ermöglicht wird.
Die Geschirrspülmaschine kann insbesondere als Einkammer-Geschirrspülmaschine ausgestaltet sein, also als Geschirrspülmaschine, welche genau eine Reinigungskammer aufweist. Das Spülgut kann stationär in dieser einen Reinigungskammer verbleiben.

Die Geschirrspülmaschine kann insbesondere, wie oben dargestellt, ausgewählt sein aus der Gruppe bestehend aus einer Frontlader-Geschirrspülmaschine, einer Toplader-Geschirrspülmaschine und einer Hauben-Geschirrspülmaschine. Unter einer Frontlader-Geschirrspülmaschine ist dabei allgemein eine Geschirrspülmaschine zu verstehen, welche an ihrer Vorderseite eine Tür aufweist, durch welche das Spülgut in die Reinigungskammer einbringbar und/oder aus der Reinigungskammer entnehmbar ist. In analoger Weise ist unter einer Toplader-Geschirrspülmaschine eine Geschirrspülmaschine zu verstehen, welche an ihrer Oberseite eine entsprechende Tür zum Beladen und/oder Entladen der Geschirrspülmaschine aufweist. Unter einer Hauben-Geschirrspülmaschine ist dementsprechend eine Geschirrspülmaschine zu verstehen, bei welcher die Reinigungskammer ganz oder teilweise durch eine Haube gebildet wird, welche von einer Basis der Geschirrspülmaschine abnehmbar ist, um eine Beladung und/oder Entladung der Geschirrspülmaschine zu ermöglichen. Die Haube selbst bildet also in diesem Fall die Tür im Sinne der obigen Definition und/oder einen Teil derselben. Beispielsweise kann die Haube nach oben auffahrbar sein, beispielsweise mittels einer entsprechenden Führung mit mindestens einem Gegengewicht, so dass die Haube durch einen Benutzer nach oben verschoben werden kann.

Die Geschirrspülmaschine kann somit insbesondere als Programmautomat ausgestaltet sein. Das mindestens eine Reinigungsprogramm oder, falls mehrere Reinigungsprogramme vorgesehen sind, mindestens eines der Reinigungsprogramme können weiterhin mindestens einen Trocknungsschritt umfassen. Beispielsweise kann in dem Trocknungsschritt eine Beaufschlagung des Spülguts mit erwärmter Luft und/oder Frischluft erfolgen. Die Steuerung kann insbesondere eingerichtet sein, um den Trocknungsschritt nach Durchführung des Klarspülschritts durchzuführen. Wie oben ausgeführt, kann der Trocknungsschritt einfach oder mehrfach durchgeführt werden. So kann, wie oben ausgeführt, die Steuerung einerseits derart eingerichtet sein, dass der Klarspülschritt nach Betätigung des Bedienelements nach Durchführung des mindestens einen Spülschritts erstmalig durchgeführt wird, gefolgt von dem mindestens einen Trocknungsschritt, welcher dann ebenfalls erstmalig durchgeführt werden kann. Alternativ kann, wie oben ausgeführt, die Steuerung auch derart eingerichtet sein, dass das Reinigungsprogramm zunächst vollständig und einschließlich des mindestens einen Spülschritts und des mindestens einen Klarspülschritts sowie optional des mindestens einen Trocknungsschritts durchgeführt wird und anschließend mindestens eine erneute Durchführung des Klarspülschritts aufgrund der Betätigung des Bedienelements erfolgt, gefolgt von einem weiteren Trocknungsschritt. So kann die Steuerung allgemein eingerichtet sein, um den Trocknungsschritt zumindest einmal anschließend an den aufgrund der Betätigung des Bedienelements durchgeführten Klarspülschritt durchzuführen.

Wie oben ausgeführt, kann die Steuerung der Geschirrspülmaschine vorzugsweise eingerichtet sein, um das Reinigungsprogramm zunächst vollständig und einschließlich des Spülschritts und des Klarspülschritts durchzuführen. Die Steuerung kann weiterhin eingerichtet sein, um eine Verweildauer nach Durchführung des Reinigungsprogramms zu erfassen, also eine Zeitdauer, für welche das Spülgut nach Durchführung des Reinigungsprogramms, also nach Beendigung des Reinigungsprogramms, in der Reinigungskammer verblieben ist. Diese Verweildauer kann, wie oben bereits ausgeführt, mit einem oder mehreren Schwellwerten verglichen werden, um entsprechend dieses Vergleichs eine oder mehrere Aktionen durchzuführen. Wie bereits oben ausgeführt wurde, kann beispielsweise entsprechend dieses Vergleichs eine Freischaltung des Bedienelements erfolgen. So kann die Steuerung eingerichtet sein, um zu erkennen, dass das Spülgut nach der Durchführung des Reinigungsprogramms für mehr als eine vorgegebene Zeitdauer in der Reinigungskammer verblieben ist, und um erst bei Erkennung dieser Bedingung die erneute Durchführung des Klarspülschritts aufgrund der Betätigung des Bedienelements zu ermöglichen. Alternativ oder zusätzlich können jedoch auch eine oder mehrere andere Aktionen entsprechend des Vergleichs der Verweildauer mit einem oder mehreren Schwellwerten durchgeführt werden. So kann beispielsweise aufgrund einer festgestellten Verweildauer automatisch ein erneuter Klarspülschritt durchgeführt werden. Dabei kann die Verweildauer mit einer zweiten vorgegebenen Zeitdauer verglichen werden, welche identisch zu der für die Freischaltung des Bedienelements verwendeten vorgegebenen Zeitdauer (auch als erste Zeitdauer zu bezeichnen) sein kann oder welche verschieden von dieser ersten Zeitdauer sein kann. So können, wie oben ausgeführt, ein oder mehrere Schwellenwerte verwendet werden. Beispielsweise kann diese zweite vorgegebene Zeitdauer in einem Bereich von 5 Minuten bis 1 Stunde liegen, insbesondere in einem Bereich von 10 Minuten bis 45 Minuten. Auch andere Werte sind jedoch möglich.

Dementsprechend kann die Steuerung beispielsweise eingerichtet sein, um das Reinigungsprogramm zunächst vollständig und einschließlich des Spülschritts und des Klarspülschritts durchzuführen. Die Steuerung kann weiterhin eingerichtet sein, um zu erkennen, dass das Spülgut nach der Durchführung des Reinigungsprogramms für mehr als die vorgegebene zweite Zeitdauer in der Reinigungskammer verblieben ist, und um bei Erkennung dieser Bedingung automatisch einen erneuten Klarspülschritt zu starten. Unter einem automatischen Start ist diesbezüglich ein Start des Klarspülschritts zu verstehen, welcher keinen erneuten Benutzereingriff mehr erfordert.

Nach Durchführung des erneuten Klarspülschritts kann die Verweildauer in dieser Variante, bei welcher der erneute Klarspülschritt automatisch ausgeführt wird, oder in der oben genannten Variante, bei welcher der erneute Klarspülschritt aufgrund einer Betätigung des Bedienelements durchgeführt wird, wieder auf Null gesetzt werden, so dass die neue Verweildauer beispielsweise dann ab Beendigung des erneuten Klarspülschritts gemessen wird. Diese neue Verweildauer kann dann wiederum mit einem oder mehreren Schwellwerten verglichen werden, so dass beide genannten Varianten erneut durchgeführt werden. So kann beispielsweise, wenn festgestellt wird, dass die neue Verweildauer eine vorgegebene Zeitdauer oder eine vorgegebene zweite Zeitdauer überschreitet, erneut das Bedienelements freigeschaltet werden und/oder automatisch ein erneuter Klarspülschritt gestartet werden.

Allgemein ist es somit auch möglich, bei Erkennen einer Verweildauer, die einen oder mehrere Schwellenwerte (beispielsweise die erste vorgegebene Zeitdauer und/oder die zweite vorgegebene Zeitdauer) überschreitet, automatisch einen erneuten Klarspülschritt zu starten. Dieser erneute automatische Start kann auch iterativ erfolgen, so dass beispielsweise, wenn das Spülgut über längere Zeit in der Reinigungskammer verbleibt, regelmäßig (beispielsweise alle 5 Minuten bis 30 Minuten) automatisch ein erneuter Klarspülschritt gestartet wird. So kann beispielsweise eine temporäre oder auch dauerhafte Verunreinigung oder sogar Schädigung des Spülguts effizient vermieden werden.

In einem weiteren Aspekt der vorliegenden Erfindung wird ein Verfahren zum Reinigen von Spülgut vorgeschlagen, insbesondere ein Geschirrspülverfahren und besonders bevorzugt ein Gläserspülverfahren. Bezüglich möglicher Ausgestaltungen des Spülguts kann auf die obige Beschreibung verwiesen werden.

Das Verfahren umfasst eine Beaufschlagung des Spülguts in einer Reinigungskammer mit mindestens einer Spülflüssigkeit und mindestens einer Klarspülflüssigkeit, vorzugsweise sequenziell. Diese Beaufschlagung erfolgt bei oder im Rahmen einer Durchführung mindestens eines Reinigungsprogramms. Das Reinigungsprogramm umfasst mindestens einen Spülschritt, in welchem das Spülgut mit der Spülflüssigkeit beaufschlagt wird, und mindestens einen Klarspülschritt, in welchem das Spülgut mit der Klarspülflüssigkeit beaufschlagt wird. Das Verfahren umfasst weiterhin eine Verwendung mindestens eines durch einen Benutzer betätigbaren Bedienelements. Der Klarspülschritt ist zumindest einmal aufgrund einer Betätigung des Bedienelements nach Durchführung zumindest des Spülschritts des Reinigungsprogramms durchführbar.

Das Verfahren kann insbesondere unter Verwendung der Geschirrspülmaschine gemäß einem oder mehreren der oben beschriebenen oder unten noch näher beschriebenen Ausgestaltungen durchgeführt werden. Dementsprechend kann bezüglich möglicher Ausgestaltungen des Verfahrens auf die obige Beschreibung oder die nachfolgende Beschreibung bevorzugter Ausführungsformen der Geschirrspülmaschine verwiesen werden oder umgekehrt. Auch andere Ausgestaltungen sind jedoch grundsätzlich möglich.

So kann das Verfahren beispielsweise derart ausgestaltet werden, dass zunächst das Reinigungsprogramm vollständig und einschließlich des Spülschritts und des Klarspülschritts sowie optional mindestens eines Trocknungsschritts durchgeführt wird und wobei anschließend der Klarspülschritt aufgrund der Betätigung des Bedienelements erneut durchführbar ist, insbesondere durchgeführt wird.

Weiterhin kann das Verfahren derart eingerichtet sein, dass erkannt wird, ob das Spülgut nach der Durchführung des Reinigungsprogramms für mehr als eine vorgegebene Zeitdauer in der Reinigungskammer verblieben ist, und erst bei Erkennung dieser Bedingung eine Betätigung des Bedienelements zur erneuten Durchführung des Klarspülschritts ermöglicht werden.

Bezüglich weiterer möglicher Ausgestaltungen des Verfahrens kann auf die obige Beschreibung der Geschirrspülmaschine verwiesen werden.

Die Geschirrspülmaschine und das Verfahren gemäß der vorliegenden Erfindung weisen gegenüber bekannten Geschirrspülmaschine und Verfahren eine Vielzahl an Vorteilen auf. Insbesondere wird das oben beschriebene Problem zumindest teilweise gelöst, dass ein rechtzeitiges Entnehmen des Spülguts in der Praxis nicht immer möglich ist. Die bedarfsgerechte Durchführung oder erneute Durchführung des Spülschritts aufgrund einer Betätigung des Bedienelements, insbesondere eine zusätzliche und gezielte Frischwasserklarspülung, kann das oben beschriebene Problem jedoch zumindest teilweise beheben. Der hierfür erforderliche Ressourceneinsatz ist überschaubar, und die gegebenenfalls zusätzlich benötigte Zeitdauer für den Klarspülschritt, insbesondere den zusätzlichen Klarspülschritt, ist in der Praxis tolerierbar. Der zusätzliche Ressourcenverbrauch könnte sogar vermieden werden, indem der Klarspülschritt vom übrigen Spülprozess entkoppelt wird und dementsprechend der Klarspülschritt und gegebenenfalls eine Trocknung erst auf Benutzeranforderung mittels des Bedienelements erfolgt.

Wie oben ausgeführt, besteht hinsichtlich der Gestaltung des Reinigungsprogramms und hinsichtlich der Initiierung des Klarspülschritts mittels des Bedienelements eine hohe Flexibilität. So kann der Klarspülschritt insbesondere als zusätzlicher Klarspülschritt ausgestaltet sein, einschließlich gegebenenfalls einer zusätzlichen Trocknung. Der Klarspülschritt, einschließlich der optionalen Trocknung, kann dementsprechend der entsprechende Prozessschritt des Gesamtprozesses sein oder auch ein modifizierter Prozessschritt. Insbesondere kann bei einer nachträglichen Aktivierung des Klarspülschritts, nach Durchlauf des übrigen Reinigungsprogramms, eine verringerte Menge an Klarspülflüssigkeit, insbesondere an Frischwasser, erforderlich sein, so dass der Klarspülschritt gegebenenfalls auch kürzer als bei herkömmlichen Klarspülschritten ausfallen kann.

Die Geschirrspülmaschine kann insbesondere als Programmautomat und/oder als Geschirrspülmaschine mit stationärem Geschirrspülverfahren ausgestaltet sein. Die Geschirrspülmaschine kann insbesondere mit einer Möglichkeit ausgerüstet sein, den Klarspülschritt auf Anforderung des Benutzers auszuführen. Das Bedienelement kann dabei, wie oben ausgeführt, ein spezielles Bedienelement sein, welches lediglich für die Auslösung des Klarspülschritts vorgesehen ist, oder kann ein Bedienelement sein, welches mehrere Funktionen erfüllt. In letzterem Fall kann beispielsweise ein vorhandenes Bedienelement in Doppel- oder Mehrfachfunktion benutzt werden und kann unter bestimmten Bedingungen bei Betätigung den Klarspülschritt auslösen.

Ist ein spezielles Bedienelement ausschließlich für die Auslösung des Klarspülschritts vorgesehen, so kann es sich bei diesem Bedienelement beispielsweise um eine Taste und/oder einen Schalter handeln. Alternativ oder zusätzlich kann das Bedienelement in diesem oder auch in anderen Fällen auch beispielsweise mit vorhandenen Bestandteilen der Geschirrspülmaschine gekoppelt werden, beispielsweise mit einer Tür. So kann die Geschirrspülmaschine beispielsweise derart ausgestaltet werden, dass ein kurzes Öffnen der Tür und/oder der Haube von der Steuerung erkannt und entsprechend als Anforderung für einen separaten Klarspülschritt interpretiert wird. So kann beispielsweise das Bedienelement ganz oder teilweise in eine Tür der Geschirrspülmaschine integriert werden, und ein kurzfristiges Öffnen der Tür, beispielsweise bis hin zu einer Zeitdauer von 3 Sekunden bis maximal 10 Sekunden oder weniger, kann als Betätigung des Bedienelements interpretiert werden, so dass aufgrund dieser Betätigung der Klarspülschritt auslösbar ist. Eine derartige kurzfristige Öffnung der Tür ist in der Regel für eine Entnahme des Spülguts aus der Reinigungskammer und/oder eine Beschickung der Reinigungskammer mit Spülgut zu kurz und kann deshalb in der Regel sicher als eine Betätigung des Bedienelements interpretiert werden. Dementsprechend kann also beispielsweise eine Öffnungszeit einer Tür der Geschirrspülmaschine erfasst werden und mit einem maximalen Schwellwert verglichen werden, welcher beispielsweise im Bereich von 0,5 Sekunden ≤ t < 10 Sekunden liegen kann. Wird die Tür für eine Zeitdauer unterhalb dieses Schwellwerts geöffnet, so kann dies als Betätigung des Bedienelements interpretiert werden, und der oben beschriebene Klarspülschritt, insbesondere der zusätzliche Klarspülschritt, kann ausgelöst werden.

Wie oben ausgeführt, kann als Bedienelement auch ein Bedienelement mit MehrfachFunktion genutzt werden. So kann ein Bedienelement verwendet werden, welches ansonsten auch anderweitig, also für mindestens eine Funktion abgesehen von der Auslösung des Klarspülschritts, verwendet wird oder verwendbar ist. Dieses Bedienelement kann zeitlich abhängig belegt werden, so dass dieses vorübergehend für die Auslösung des Klarspülschritts nutzbar ist. Beispielsweise kann das Bedienelement zeitlich abhängig so belegt werden, dass dieses nur unter den richtigen Rahmenbedingungen die Aktivierung des Klarspülschritts initiiert.

Eine Grundlage hierfür kann die Erkennung der gültigen Rahmenbedingungen sein. So können beispielsweise, wie oben ausgeführt, eine oder mehrere Rahmenbedingungen darin bestehen, dass zumindest der Spülschritt, vorzugsweise ein gesamtes Reinigungsprogramm, beendet ist und dass die Tür und/oder Haube nicht geöffnet wurde, zumindest nicht länger als ein vorgegebener Schwellwert für eine Entnahme des Spülguts. Weiterhin soll nach dem Programmende mindestens eine vorgegebene Zeitdauer vergangen sein, beispielsweise eine Zeitdauer von mindestens 1 Minute, beispielsweise mindestens 2 Minuten.

Sind eine oder mehrere Bedingungen und/oder Rahmenbedingungen erfüllt, so kann das Bedienelement mit Mehrfachfunktion dann derart funktionell belegt werden, dass eine Betätigung des Bedienelements den Klarspülschritt auslöst. Dies kann dem Benutzer beispielsweise optisch, akustisch, haptisch oder durch eine Kombination der genannten Möglichkeiten signalisiert werden. Beispielsweise kann eine Programmstart-Taste am Programmende nach Ablauf der definierten Zeit anfangen zu blinken und hierdurch signalisieren, dass das erneute Betätigen der Programmstart-Taste den Klarspülschritt sowie optional den nachfolgenden Trocknungsschritt starten kann. Nach dem Öffnen der Tür, beispielsweise der Klappe und/oder Haube, für mehr als eine vorgegebene Zeitdauer, beispielsweise für mehr als 3 Sekunden, kann die Programmstart-Taste optional in den normalen Modus starten, indem sie bei Betätigen das Gesamtprogramm wieder startet.

Die Benutzerschnittstelle, beispielsweise ein Display der Benutzerschnittstelle, kann optional nach Ablauf der definierten Zeit einen Hinweis anzeigen, der zum Ausdruck bringt, dass eine sofortige Entnahme nicht das optimale Trocknungsergebnis bringen wird und dass deshalb empfohlen wird, durch Betätigung des Bedienelements (beispielsweise der Programmstart-Taste) den Klarspülschritt, beispielsweise die Frischwasserklarspülung, sowie optional die Trocknung zu starten oder erneut zu starten. Ein Abbruchkriterium für den internen Zeitablauf kann dabei wiederum eine entsprechende Türöffnung sein, beispielsweise eine Öffnung einer Klappe und/oder einer Haube der Geschirrspülmaschine.

Die Geschirrspülmaschine kann weiterhin derart eingerichtet sein, um die durch das Bedienelement aktivierte Klarspülung lediglich in einem oder mehreren Programmen bereitzustellen, beispielsweise lediglich in einem Gläserprogramm, wohingegen in einem oder mehreren weiteren Programmen eine derartige zusätzliche Aktivierung des Klarspülschritts durch Betätigung des Bedienelements nicht möglich ist.

Die Geschirrspülmaschine, insbesondere die Steuerung der Geschirrspülmaschine, kann auch eingerichtet sein, um zu lernen, insbesondere um einen Selbstlernprozess durchzuführen. So kann beispielsweise über mehrere Reinigungsprogramme hinweg eine durchschnittlich zwischen einem Ende des Reinigungsprogramms und einem Öffnen der Tür, insbesondere einer Klappe und/oder Haube der Reinigungskammer, verstreichende Zeitdauer erfasst werden. Entsprechend dieser mittleren Zeitdauer, welche im Rahmen eines Lernprozesses ermittelt wird, kann dann beispielsweise die vorgegebene Zeitdauer, also der Schwellwert, ermittelt werden, bei deren Verstreichen die erneute Durchführung des Klarspülschritts aufgrund der Betätigung des Bedienelements freigeschaltet wird. Alternativ oder zusätzlich kann die durchschnittlich für eine Beladung der Geschirrspülmaschine mit Spülgut und/oder eine Entnahme des Spülguts aus der Geschirrspülmaschine benötigte Zeitdauer erfasst werden, so dass der oben genannte Schwellwert, welcher eine Entnahme des Spülguts aus der Reinigungskammer kennzeichnet, durch einen Lernprozess ermittelt wird. Dementsprechend kann sich die Geschirrspülmaschine den Gewohnheiten des Benutzers und/oder üblichen Betriebsabläufen anpassen. Grundlage für eine derartige Erhebung und/oder einen derartigen Lernprozess können beispielsweise die letzten 10, die letzten 20 oder die letzten 50 Programmabläufe sein. Vorstellbar sind jedoch auch andere Szenarien, wie beispielsweise tageszeitbezogene Szenarien und/oder Cluster.

Wie oben ausgeführt, könnte die Geschirrspülmaschine wiederum den Spülbetrieb von dem Klarspülbetrieb bzw. dem Klarspülbetrieb einschließlich der Trocknung entkoppeln. Vorteilhafter ist jedoch eine Ausführung des Gesamtprogramms mit dann später wiederholtem Klarspülschritt, optional einschließlich des Trocknungsschritts, da unter dieser Bedingung die sofortige Entnahme nach Programmende ohne Benutzeraktion möglich ist.

Mittels der vorgeschlagenen Geschirrspülmaschine und des vorgeschlagenen Verfahrens erhält ein Benutzer die Möglichkeit, ein optimales oder zumindest gegenüber herkömmlichen Vorrichtungen und Verfahren verbessertes Trocknungsergebnis zu erzielen. Diese Verbesserung wird erreicht, auch wenn das Spülgut nicht innerhalb einer optimalen Zeitspanne aus der Reinigungskammer entnommen wird. Weiterhin kann dieses verbesserte Reinigungsergebnis ohne ein Nachpolieren und/oder ohne eine Wiederholung des vollständigen Reinigungsprogramms erfolgen. So können aufgrund der erneuten Betätigung des Bedienelements lediglich der Klarspülschritt sowie optional der Trocknungsschritt gestartet werden oder erneut gestartet werden, ohne dass eine Wiederholung beispielsweise des Spülschritts erfolgt.

Die Geschirrspülmaschine kann aus der Vergangenheit und/oder dem Benutzerverhalten lernen und eine Auslösung des zusätzlichen Klarspülschritts und optional der zusätzlichen Trocknung derart ermöglichen, dass ein Benutzer mit großer Wahrscheinlichkeit eine gute Voraussetzung für ein trockenes Spülgut mit verbessertem Trocknungsergebnis erhält.

### Kurze Beschreibung der Figuren

Weitere Einzelheiten und Merkmale der Erfindung ergeben sich aus der nachfolgenden Beschreibung von bevorzugten Ausführungsbeispielen, insbesondere in Verbindung mit den Unteransprüchen. Hierbei können die jeweiligen Merkmale für sich alleine oder zu mehreren in Kombination miteinander verwirklicht sein. Die Erfindung ist nicht auf die Ausführungsbeispiele beschränkt. Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente.

Im Einzelnen zeigen:
- Figur 1: ein schematisches Ausführungsbeispiel einer erfindungsgemäßen Geschirrspülmaschine; und
- Figur 2: ein Ausführungsbeispiel eines erfindungsgemäßen Verfahrens zur Reinigung von Spülgut.

### Beschreibung der Ausführungsbeispiele

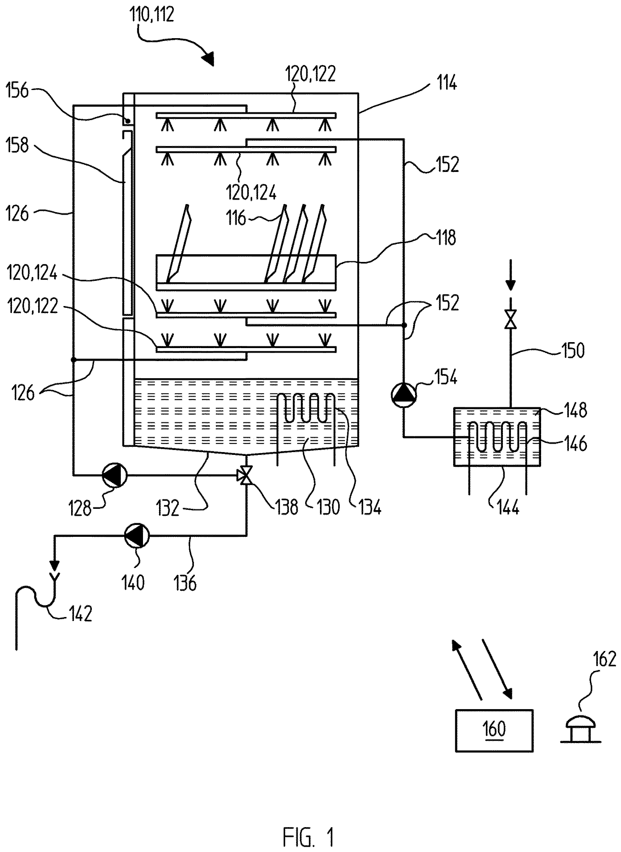

In Figur 1 ist ein Ausführungsbeispiel einer erfindungsgemäßen Geschirrspülmaschine 110 dargestellt, welche in diesem Ausführungsbeispiel als Einkammer-Geschirrspülmaschine 112 ausgestaltet ist und welche eine Reinigungskammer 114 aufweist. In der Reinigungskammer 114 ist Spülgut 116 aufnehmbar, beispielsweise mittels mindestens eines Spülgutkorbs 118, und mit mindestens zwei verschiedenen Arten von Reinigungsfluid beaufschlagbar. Bei dem Spülgut 116 kann es sich beispielsweise um Gegenstände handeln, welche für die Zubereitung, Darreichung oder Aufbewahrung von Speisen eingerichtet sind. Exemplarisch sind in diesem Ausführungsbeispiel Teller dargestellt, wobei jedoch auch beispielsweise andere Arten von Geschirr einsetzbar sind.

Zur Beaufschlagung des Spülguts 116 mit dem Reinigungsfluid weist die Geschirrspülmaschine 110 eine Fluidvorrichtung 120 auf, welche in diesem Ausführungsbeispiel zweiteilig ausgebildet ist. So weist die Fluidvorrichtung 120 ein Spüldüsensystem 122 und ein Klarspüldüsensystem 124 auf. Das Spüldüsensystem 122 ist über Spülleitungen 126 und eine Spülpumpe 128 mit Spülflüssigkeit 130 aus einem Tank 132 beaufschlagbar. Optional kann der Waschtank 132 über eine Heizvorrichtung 134 verfügen. Über eine Ablaufleitung 136, ein 3-Wege-Ventil 138 sowie optional eine Ablaufpumpe 140 kann der Waschtank 132 in einen Abfluss 142 entleert werden. Durch eine entsprechende Schaltung des 3-Wege-Ventils 138 und der Pumpen 128, 140 kann somit wahlweise ein Spülschritt durchgeführt werden, bei welchem das Spülgut 116 im Umwälzbetrieb aus dem Waschtank 132 mit Spülflüssigkeit 130 beaufschlagt wird, oder bei welchem der Waschtank 132 in den Abfluss 142 entleert wird.

Zusätzlich zu dem Waschtank 132 umfasst die Geschirrspülmaschine 110 in dem dargestellten Ausführungsbeispiel einen Klarspültank 144, welcher vorzugsweise ebenfalls eine Heizvorrichtung 146 umfasst. Beispielsweise kann der Klarspültank 144 ganz oder teilweise als Boiler ausgestaltet sein. Der Klarspültank 144 dient zur Aufnahme von Klarspülflüssigkeit 148 und kann, beispielsweise über eine Frischwasserzuleitung 150, mit Frischwasser gespeist werden.

Das Klarspüldüsensystem 124 ist über Klarspülleitungen 152 und eine Klarspülpumpe 154 mit Klarspülflüssigkeit 148 aus dem Klarspültank 144 beaufschlagbar. Diese Beaufschlagung erfolgt vorzugsweise im einmaligen Betrieb im Rahmen eines oder mehrerer Klarspülschritte.

Die Geschirrspülmaschine 110 kann darüber hinaus eine oder mehrere weitere Vorrichtungen umfassen, welche vorliegend nicht dargestellt sind. So können beispielsweise ein oder mehrere Dosiereinrichtungen vorgesehen sein, beispielsweise um einen oder mehrere Zusatzstoffe in den Waschtank 132 und/oder den Klarspültank 144 zu dosieren. So kann beispielsweise der Spülflüssigkeit 130 in dem Waschtank 132 ein Reinigerkonzentrat beigemischt werden. Der Klarspülflüssigkeit 148 in dem Klarspültank 144 kann beispielsweise ein Klarspüler beigemengt werden.

Weiterhin kann die Geschirrspülmaschine 110 einen oder mehrere Sensoren umfassen, beispielsweise einen oder mehrere Füllstandssensoren und/oder einen oder mehrere Trübungssensoren und/oder einen oder mehrere Sensoren, welche eine Anwesenheit des Spülguts 116 im Inneren der Reinigungskammer 114 erfassen können. Weiterhin kann optional mindestens ein Öffnungssensor 156 vorgesehen sein, welcher beispielsweise als Magnetsensor ausgestaltet sein kann und welcher ein Öffnen einer Tür 158 der Reinigungskammer 114 registrieren kann.

Die Geschirrspülmaschine 110 umfasst weiterhin eine Steuerung 160. Die Steuerung 160 kann beispielsweise mit einem, mehreren oder allen der in der Geschirrspülmaschine 110 vorgesehenen Aktoren verbunden sein, beispielsweise mit einem oder mehreren der Ventile wie beispielsweise dem 3-Wege-Ventil 138 und/oder mit einer oder mehreren oder allen der Pumpen 128, 140 und 154. Dementsprechend kann die Steuerung 160 eingerichtet sein, um einen Programmablauf mindestens eines Reinigungsprogramms in der Geschirrspülmaschine 110 vollständig oder teilweise zu steuern. Weiterhin kann die Steuerung 160 mit einem, mehreren oder allen Sensoren der Geschirrspülmaschine 110 verbunden sein, beispielsweise dem Öffnungssensor 156.

Wie oben ausgeführt, ist die Steuerung 160 eingerichtet, um mindestens ein Reinigungsprogramm durchzuführen, wobei das Reinigungsprogramm mindestens einen Spülschritt umfasst, in welchem das Spülgut 116 mit der Spülflüssigkeit 130 beaufschlagt wird, sowie mindestens einen Klarspülschritt, in welchem das Spülgut 116 mit der Klarspülflüssigkeit 148 beaufschlagt wird. Weiterhin kann mindestens ein Trocknungsschritt vorgesehen sein, in welchem beispielsweise einfach aufgrund einer Erwärmung, eines Abtropfens oder auch einer Beaufschlagung mit einem Luftstrom, beispielsweise einem erwärmten Luftstrom, ein Abtrocknen des Spülguts 116 erfolgen kann.

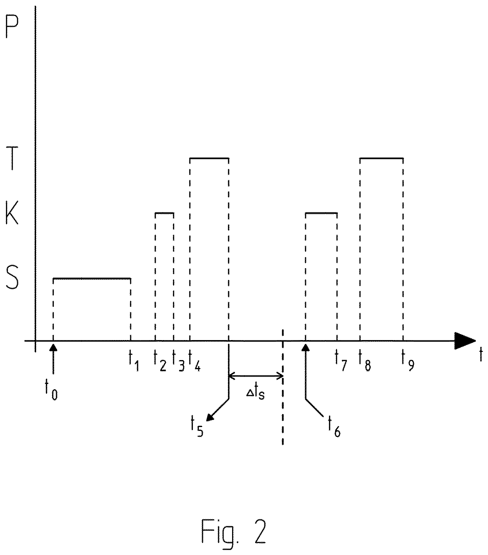

In Figur 2 ist ein Ausführungsbeispiel eines erfindungsgemäßen Reinigungsprogramms schematisch dargestellt. Dabei sind auf der vertikalen Achse die mit P bezeichneten Programmschritte aufgetragen, wobei der Spülschritt mit S bezeichnet wird, der Klarspülschritt mit K und der Trocknungsschritt mit T. Die mit t bezeichnete horizontale Achse bezeichnet einen Zeitverlauf. So kann zu einem Zeitpunkt t₀ ein vorgegebenes Reinigungsprogramm gestartet werden, beispielsweise ein Reinigungsprogramm, welches durch einen Benutzer aus einer Liste möglicher Reinigungsprogramme auswählbar ist. Das Reinigungsprogramm umfasst den Spülschritt, den Klarspülschritt sowie den optionalen Trocknungsschritt. Die Zeitdauern dieser Schritte sind in Figur 2 exemplarisch angegeben. So dauert der Spülschritt in dem dargestellten Ausführungsbeispiel von t₀ bis t₁, der Klarspülschritt von t₂ bis t₃, und der optionale Trocknungsschritt von t₄ bis t₅.

In dem dargestellten Ausführungsbeispiel wird nach Beendigung des Reinigungsprogramms, also nach dem Zeitpunkt t₅ oder, falls kein Trocknungsschritt erfolgt, nach dem Zeitpunkt t₃, die Zeitdauer erfasst, während derer das Spülgut 116 innerhalb der Reinigungskammer 114 verbleibt. Dies kann beispielsweise dadurch erfolgen, dass mittels des Öffnungssensors 156 erkannt wird, ob die Tür 158 geöffnet wird und, falls dies der Fall ist, ob diese Öffnung der Tür für mehr als einen vorgegebenen Schwellwert erfolgt. Dieser Schwellwert kann ein Erfahrungswert, beispielsweise ein durch die Steuerung 160 selbstständig angelernter und/oder durch einen Benutzer eingegebener Wert, sein, welcher für eine Entnahme des Spülguts 116 aus der Reinigungskammer 114 mindestens erforderlich ist. Wird festgestellt, dass seit Beendigung des Reinigungsprogramms, also seit dem Zeitpunkt t₃ (wenn kein Trocknungsschritt durchgeführt wird) bzw. seit dem Zeitpunkt t₅ (wenn ein Trocknungsschritt durchgeführt wird), mehr als eine vorgegebene Zeitdauer verstrichen ist, so wird ein Bedienelement 162 der Geschirrspülmaschine 110 durch die Steuerung 160 freigeschaltet, so dass mittels dieses Bedienelements erneut ein Klarspülschritt durchgeführt werden kann. Beispielsweise kann die Steuerung 160 eingerichtet sein, um einem
Benutzer der Geschirrspülmaschine 110 diese Freischaltung des Bedienelements 162 durch ein optisches, akustisches oder haptisches Signal zu vermitteln, beispielsweise indem das Bedienelement 162 blinkt und/oder seine Farbe wechselt. Wird also zu einem Zeitpunkt t₆, welcher um mehr als eine vorgegebene Zeitdauer Δt_{S} nach dem Zeitpunkt t₃ (ohne Trocknungsschritt) bzw. dem Zeitpunkt t₅ (mit Trocknungsschritt) liegt, das Bedienelement 162 betätigt, so wird erneut der Klarspülschritt K gestartet, welcher bis zum Zeitpunkt t₇ dauert. An den erneuten Klarspülschritt K kann sich beispielsweise wiederum ein erneuter Trocknungsschritt T anschließen, beispielsweise von tg bis t₉. Nach dem Zeitpunkt t₇ (wenn kein erneuter Trocknungsschritt durchgeführt wird) bzw. nach dem Zeitpunkt t₉ (wenn erneut ein Trocknungsschritt durchgeführt wird) kann wiederum die Zeitdauer erfasst werden, während derer das Spülgut 116 ohne Entnahme im Inneren der Reinigungskammer 114 verbleibt. Überschreitet diese Zeitdauer wiederum eine vorgegebene Zeitdauer, so kann erneut über die Steuerung 160 eine Freischaltung des Bedienelements 162 erfolgen, so dass wiederum zumindest der Klarspülschritt K erneut durchgeführt werden kann, optional wiederum gefolgt von einem weiteren Trocknungsschritt. Dementsprechend können der mindestens eine zusätzliche, durch das Bedienelement 162 initiierte Klarspülschritt sowie optional der zusätzliche Trocknungsschritt auch wiederholt durchgeführt werden.

In dem dargestellten Ausführungsbeispiel gemäß Figur 1 ist das Bedienelement 162 ein zusätzliches Bedienelement. Das Bedienelement 162 kann jedoch auch eine Mehrfachfunktion umfassen und/oder kann in andere Elemente der Geschirrspülmaschine 110 integriert sein, wobei die Funktion der Auslösung des zusätzlichen Klarspülschritts zum Zeitpunkt t₆ lediglich von der Steuerung 160 nach Überschreiten des Zeitpunkts t₅ + Δt_{S} (bei Durchführung des Trocknungsschritts) bzw. t₃ + Δt_{S} (ohne Durchführung des Trocknungsschritts) freigeschaltet wird. So kann es sich bei dem Bedienelement 162 beispielsweise um einen Programmstart-Schalter, insbesondere einen Programm-Taster, handeln, über welchen auch das gesamte Reinigungsprogramm gestartet werden kann.

Alternativ oder zusätzlich kann das Bedienelement 162 auch beispielsweise in die Tür 158 integriert werden. So kann beispielsweise ein kurzfristiges Öffnen der Tür 158 als Betätigung des Bedienelements 162 interpretiert werden. Beispielsweise kann für diesen Zweck eine maximale Zeitdauer vorgegeben sein, wobei ein Öffnen der Tür 148 unterhalb dieses zeitlichen Schwellwerts als ein betätigendes Bedienelement 162 interpretiert wird. Zu diesem Zweck kann wiederum beispielsweise der Öffhungssensor 156 herangezogen werden. Beispielsweise kann eine Öffhungsdauer von weniger als einem Schwellwert von 1 Sekunde bis 10 Sekunden, beispielsweise einem Schwellwert von 2 Sekunden oder 3 Sekunden, als eine Betätigung des Bedienelements 162 und somit eine Anforderung eines erneuten Klarspülschritts interpretiert werden.

Alternativ zu dem in Figur 2 dargestellten Programmablauf können jedoch auch andere Programmabläufe im Rahmen der vorliegenden Erfindung realisiert werden. So kann beispielsweise der Klarspülschritt K erst auf Anforderung durch das Bedienelement 162 initiiert werden. Beispielsweise kann das Reinigungsprogramm derart ablaufen, dass zunächst ausschließlich der Spülschritt S durchgeführt wird. Nach Durchführung des Spülschritts S kann dann beispielsweise das Bedienelement 162 durch die Steuerung 160 freigeschaltet werden, so dass eine Betätigung des Bedienelements 162 durch einen Benutzer als Anforderung des Klarspülschritts K sowie optional des anschließenden Trocknungsschritts T interpretiert wird. Auch Ausgestaltungen, bei denen der Klarspülschritt K sowie optional zusätzlich der Trocknungsschritt T ausschließlich auf Anforderung mittels des Bedienelements 162 und/oder erneut auf Anforderung mittels des Bedienelements 162 durchgeführt werden, sind denkbar. Weiterhin sind, wie oben ausgeführt, alternativ oder zusätzlich Ausführungsformen denkbar, bei denen der Klarspülschritt K erneut durchgeführt wird, wenn eine oder mehrere Bedingungen erfüllt sind. Die erneute Durchführung des Klarspülschritts kann beispielsweise durch Betätigung des Bedienelements 162 und/oder auch automatisch erfolgen. So kann, wie oben ausgeführt, die Verweildauer des Spülguts 116 in der Reinigungskammer 114 mit einem oder mehreren Schwellwerten, nämlich beispielsweise der vorgegebenen Zeitdauer und/oder einer zweiten vorgegebenen Zeitdauer, verglichen werden. Beispielsweise kann, wenn diese Verweildauer eine vorgegebene zweite Zeitdauer erreicht oder überschreitet, der Klarspülschritt K automatisch erneut gestartet werden.

### Bezugszeichenliste

- 110: Geschirrspülmaschine
- 112: Einkammer-Geschirrspülmaschine
- 114: Reinigungskammer
- 116: Spülgut
- 118: Spülgutkorb
- 120: Fluidvorrichtung
- 122: Spüldüsensystem
- 124: Klarspüldüsensystem
- 126: Spülleitungen
- 128: Spülpumpe
- 130: Spülflüssigkeit
- 132: Waschtank
- 134: Heizvorrichtung
- 136: Ablaufleitung
- 138: 3-Wege-Ventil
- 140: Ablaufpumpe
- 142: Abfluss
- 144: Klarspültank
- 146: Heizvorrichtung
- 148: Klarspülflüssigkeit
- 150: Frischwasserzuleitung
- 152: Klarspülleitungen
- 154: Klarspülpumpe
- 156: Öffhungssensor
- 158: Tür
- 160: Steuerung
- 162: Bedienelement

## Patentansprüche

1. Geschirrspülmaschine (110), umfassend eine Reinigungskammer (114) zur Aufnahme von Spülgut (116), wobei die Geschirrspülmaschine (110) eingerichtet ist, um das Spülgut (116) in der Reinigungskammer (114) mit mindestens einer Spülflüssigkeit (130) und mindestens einer Klarspülflüssigkeit (148) zu beaufschlagen, wobei die Geschirrspülmaschine (110) eine Steuerung (160) aufweist, wobei die Steuerung (160) eingerichtet ist, um mindestens ein Reinigungsprogramm durchzuführen, wobei das Reinigungsprogramm mindestens einen Spülschritt umfasst, in welchem das Spülgut (116) mit der Spülflüssigkeit (130) beaufschlagt wird, und mindestens einen Klarspülschritt, in welchem das Spülgut (116) mit der Klarspülflüssigkeit (148) beaufschlagt wird, wobei die Geschirrspülmaschine (110) mindestens ein durch einen Benutzer betätigbares Bedienelement (162) aufweist, wobei die Steuerung (160) derart eingerichtet ist, dass der Klarspülschritt zumindest einmal aufgrund einer Betätigung des Bedienelements (162) nach Durchführung zumindest des Spülschritts des Reinigungsprogramms durchführbar ist, wobei die Steuerung (160) eingerichtet ist, um das Reinigungsprogramm zunächst vollständig und einschließlich des Spülschritts und des Klarspülschritts durchzuführen und anschließend mindestens eine erneute Durchführung des Klarspülschritts aufgrund der Betätigung des Bedienelements (162) durchzuführen, wobei die Steuerung (160) eingerichtet ist, um zu erkennen, dass das Spülgut (116) nach der Durchführung des Reinigungsprogramms für mehr als eine vorgegebene Zeitdauer in der Reinigungskammer (114) verblieben ist, und erst bei Erkennung dieser Bedingung die erneute Durchführung des Klarspülschritts aufgrund der Betätigung des Bedienelements (162) zu ermöglichen.

2. Geschirrspülmaschine (110) nach dem vorhergehenden Anspruch, wobei die Erkennung der Bedingung, dass das Spülgut (116) nach der Durchführung des Reinigungsprogramms für mehr als die vorgegebene Zeitdauer in der Reinigungskammer (114) verblieben ist, aufgrund einer Erkennung einer Öffnung einer Tür (158) der Geschirrspülmaschine (110) erfolgt.

3. Geschirrspülmaschine (110) nach dem vorhergehenden Anspruch, wobei die Steuerung (160) eingerichtet ist, um eine Zeitdauer einer Öffnung der Tür (158) mit mindestens einem Schwellwert zu vergleichen und um bei Überschreiten des Schwellwerts auf eine Entnahme des Spülguts (116) aus der Reinigungskammer (114) zu schließen.

4. Geschirrspülmaschine (110) nach einem der vorhergehenden Ansprüche, wobei die Geschirrspülmaschine (110) mindestens einen Sensor (156) zur Erfassung mindestens eines Zustandes des Spülguts (116) und/oder der Geschirrspülmaschine (110) aufweist, wobei die Steuerung (160) eingerichtet ist, die erneute Durchführung des Klarspülschritts aufgrund der Betätigung des Bedienelements (162) in Abhängigkeit von dem erfassten Zustand zu ermöglichen.

5. Geschirrspülmaschine (110) nach einem der vorhergehenden Ansprüche, wobei die Steuerung (160) eingerichtet ist, um das Bedienelement (162) erst nach Durchführung des Spülschritts für die Betätigung freizuschalten.

6. Geschirrspülmaschine (110) nach einem der vorhergehenden Ansprüche, wobei das Bedienelement (162) eingerichtet ist, um mindestens eine Mehrfachfunktion zu erfüllen.

7. Geschirrspülmaschine (110) nach dem vorhergehenden Anspruch, wobei die Steuerung (160) eingerichtet ist, um die Funktion des Bedienelements (162), bei welcher der Klarspülschritt aufgrund der Betätigung des Bedienelements (162) nach Durchführung zumindest des Spülschritts des Reinigungsprogramms durchgeführt wird, lediglich freizuschalten, wenn mindestens eine Bedingung der Geschirrspülmaschine (110) erfüllt ist.

8. Geschirrspülmaschine (110) nach einem der vorhergehenden Ansprüche, wobei die Geschirrspülmaschine (110) eingerichtet ist, um dem Benutzer mindestens ein Signal zu übermitteln, welches anzeigt, dass aufgrund einer Betätigung des Bedienelements (162) der Klarspülschritt durchführbar ist.

9. Geschirrspülmaschine (110) nach einem der vorhergehenden Ansprüche, wobei die Steuerung (160) eingerichtet ist, um wahlweise mehrere Reinigungsprogramme durchzuführen, wobei mindestens zwei der Reinigungsprogramme jeweils den mindestens einen Spülschritt und den mindestens einen Klarspülschritt umfassen, wobei die Steuerung (160) derart eingerichtet ist, dass der Klarspülschritt mindestens eines ersten der Reinigungsprogramme zumindest einmal aufgrund einer Betätigung des Bedienelements (162) nach Durchführung des Spülschritts durchführbar ist und wobei die Steuerung (160) weiterhin derart eingerichtet ist, dass der Klarspülschritt mindestens eines zweiten der Reinigungsprogramme unabhängig von einer Betätigung des Bedienelements (162) nach Durchführung des Spülschritts durchführbar ist.

10. Geschirrspülmaschine (110) nach einem der vorhergehenden Ansprüche, wobei das Reinigungsprogramm weiterhin mindestens einen Trocknungsschritt umfasst, wobei die Steuerung (160) eingerichtet ist, um den Trocknungsschritt nach Durchführung des Klarspülschritts durchzuführen.

11. Geschirrspülmaschine (110) nach einem der vorhergehenden Ansprüche, wobei die Steuerung (160) eingerichtet ist, um das Reinigungsprogramm zunächst vollständig und einschließlich des Spülschritts und des Klarspülschritts durchzuführen, wobei die Steuerung (160) weiterhin eingerichtet ist, um zu erkennen, dass das Spülgut (116) nach der Durchführung des Reinigungsprogramms für mehr als eine vorgegebene zweite Zeitdauer in der Reinigungskammer (114) verblieben ist, und um bei Erkennung dieser Bedingung automatisch einen erneuten Klarspülschritt zu starten.

12. Verfahren zum Reinigen von Spülgut (116), umfassend eine Beaufschlagung des Spülguts (116) in einer Reinigungskammer (114) mit mindestens einer Spülflüssigkeit (130) und mindestens einer Klarspülflüssigkeit (148), wobei mindestens ein Reinigungsprogramm durchgeführt wird, wobei das Reinigungsprogramm mindestens einen Spül schritt umfasst, in welchem das Spülgut (116) mit der Spülflüssigkeit (130) beaufschlagt wird, und mindestens einen Klarspülschritt, in welchem das Spülgut (116) mit der Klarspülflüssigkeit (148) beaufschlagt wird, wobei das Verfahren weiterhin eine Verwendung mindestens eines durch einen Benutzer betätigbaren Bedienelements (162) umfasst, wobei der Klarspülschritt zumindest einmal aufgrund einer Betätigung des Bedienelements (162) nach Durchführung zumindest des Spülschritts des Reinigungsprogramms durchführbar ist, wobei bei dem Verfahren die Geschirrspülmaschine (110) nach einem der vorhergehenden Ansprüche verwendet wird, wobei zunächst das Reinigungsprogramm vollständig und einschließlich des Spülschritts und des Klarspülschritts durchgeführt wird und wobei anschließend der Klarspülschritt aufgrund der Betätigung des Bedienelements (162) erneut durchführbar ist, wobei erkannt wird, ob das Spülgut (116) nach der Durchführung des Reinigungsprogramms für mehr als eine vorgegebene Zeitdauer in der Reinigungskammer (114) verblieben ist und erst bei Erkennung dieser Bedingung eine Betätigung des Bedienelements (162) zur erneuten Durchführung des Klarspülschritts ermöglicht wird.

## Claims

1. Dishwasher (110), comprising a cleaning chamber (114) for accommodating washware (116), wherein the dishwasher (110) is configured to apply at least one washing liquid (130) and at least one final-rinse liquid (148) to the washware (116) in the cleaning chamber (114), wherein the dishwasher (110) has a controller (160), wherein the controller (160) is configured to perform at least one cleaning program, wherein the cleaning program comprises at least one washing step, in which the washing liquid (130) is applied to the washware (116), and at least one final-rinse step, in which the final-rinse liquid (148) is applied to the washware (116), wherein the dishwasher (110) has at least one control element (162) operable by a user, wherein the controller (160) is configured in such a way that the final-rinse step is performable at least once due to an operation of the control element (162) after performance of at least the washing step of the cleaning program, wherein the controller (160) is configured to perform the cleaning program in the first instance in full and including the washing step and the final-rinse step, and then to perform the final-rinse step at least once again due to operation of the control element (162), wherein the controller (160) is configured to identify that the washware (116) has remained in the cleaning chamber (114) for longer than a prespecified time period after the cleaning program has been carried out, and to allow the final-rinse step to be performed once again due to the operation of the control element (162) only when this condition is identified.

2. Dishwasher (110) according to the preceding claim, wherein the condition that the washware (116) has remained in the cleaning chamber (114) for longer than the prespecified time period after the cleaning program has been performed is identified due to an opening of a door (158) of the dishwasher (110) being identified.

3. Dishwasher (110) according to the preceding claim, wherein the controller (160) is configured to compare a time period for the door (158) being open with at least one threshold value and to conclude that the washware (116) has been removed from the cleaning chamber (114) when the threshold value is exceeded.

4. Dishwasher (110) according to one of the preceding claims, wherein the dishwasher (110) has at least one sensor (156) for detecting at least one state of the washware (116) and/or of the dishwasher (110), wherein the controller (160) is configured to allow the final-rinse step to be performed once again due to the operation of the control element (162) depending on the detected state.

5. Dishwasher (110) according to one of the preceding claims, wherein the controller (160) is configured to enable the control element (162) for operation only after the washing step has been performed.

6. Dishwasher (110) according to one of the preceding claims, wherein the control element (162) is configured to fulfill at least a multiple function.

7. Dishwasher (110) according to the preceding claim, wherein the controller (160) is configured to enable the function of the control element (162), in which function the final-rinse step is performed due to operation of the control element (162) after at least the washing step of the cleaning program has been performed, only when at least one condition of the dishwasher (110) is met.

8. Dishwasher (110) according to one of the preceding claims, wherein the dishwasher (110) is designed to transmit at least one signal to the user, said signal indicating that the final-rinse step is performable due to operation of the control element (162) .

9. Dishwasher (110) according to one of the preceding claims, wherein the controller (160) is configured to selectively perform a plurality of cleaning programs, wherein at least two of the cleaning programs each comprise the at least one washing step and the at least one final-rinse step, wherein the controller (160) is configured in such a way that the final-rinse step of at least a first of the cleaning programs is performable at least once due to operation of the control element (162) after the washing step has been performed, and wherein the controller (160) is further configured in such a way that the final-rinse step of at least a second of the cleaning programs is performable independently of an operation of the control element (162) after the washing step has been performed.

10. Dishwasher (110) according to one of the preceding claims, wherein the cleaning program further comprises at least one drying step, wherein the controller (160) is configured to perform the drying step after the final-rinse step has been performed.

11. Dishwasher (110) according to one of the preceding claims, wherein the controller (160) is configured to perform the cleaning program in the first instance in full and including the washing step and the final-rinse step, wherein the controller (160) is further configured to identify that the washware (116) has remained in the cleaning chamber (114) for longer than a prespecified second time period after the cleaning program has been performed, and to automatically start a new final-rinse step when this condition is identified.

12. Method for cleaning washware (116), comprising applying at least one washing liquid (130) and at least one final-rinse liquid (148) to the washware (116) in a cleaning chamber (114), wherein at least one cleaning program is performed, wherein the cleaning program comprises at least one washing step, in which the washing liquid (130) is applied to the washware (116), and at least one final-rinse step, in which the final-rinse liquid (148) is applied to the washware (116), wherein the method further comprises use of at least one control element (162) which can be operated by a user, wherein the final-rinse step is performable at least once due to an operation of the control element (162) after at least the washing step of the cleaning program has been performed, wherein the dishwasher (110) according to one of the preceding claims is used in the method, wherein in the first instance the cleaning program is performed in full and including the washing step and the final-rinse step, and wherein the final-rinse step is then performable once again due to operation of the control element (162), wherein it is identified whether the washware (116) has remained in the cleaning chamber (114) for longer than a prespecified time period after the cleaning program has been performed, and operation of the control element (162) to perform the final-rinse step once again is allowed only when this condition is identified.

## Revendications

1. Lave-vaisselle (110), comprenant une chambre de nettoyage (114) destinée à accueillir des articles à laver (116), le lave-vaisselle (110) étant conçu pour appliquer aux articles à laver (116) dans la chambre de nettoyage (114) au moins un liquide de lavage (130) et au moins un liquide de rinçage (148), le lave-vaisselle (110) possédant une commande (160), la commande (160) étant conçue pour exécuter au moins un programme de nettoyage, le programme de nettoyage comprenant au moins une étape de lavage, dans laquelle le liquide de lavage (130) est appliqué aux articles à laver (116), et au moins une étape de rinçage, dans laquelle le liquide de rinçage (148) est appliqué aux articles à laver (116), le lave-vaisselle (110) possédant au moins un élément de contrôle (162) actionnable par un utilisateur, la commande (160) étant conçue de telle sorte que l'étape de rinçage est exécutable au moins une fois du fait d'un actionnement de l'élément de contrôle (162) après l'exécution au moins de l'étape de lavage du programme de nettoyage, la commande (160) étant conçue pour exécuter le programme de nettoyage tout d'abord entièrement et en incluant l'étape de lavage et l'étape de rinçage et ensuite pour procéder à au moins une nouvelle exécution de l'étape de rinçage du fait de l'actionnement de l'élément de contrôle (162), la commande (160) étant conçue pour reconnaître que les articles à laver (116) sont restés dans la chambre de nettoyage (114) pendant plus qu'une durée prédéfinie après l'exécution du programme de nettoyage, et ne permettre une nouvelle exécution de l'étape de rinçage du fait de l'actionnement de l'élément de contrôle (162) que lors de la reconnaissance de cette condition.

2. Lave-vaisselle (110) selon la revendication précédente, la reconnaissance de la condition selon laquelle les articles à laver (116) sont restés dans la chambre de nettoyage (114) pendant plus que la durée prédéfinie après l'exécution du programme de nettoyage s'effectue du fait d'une reconnaissance d'une ouverture d'une porte (158) du lave-vaisselle (110).

3. Lave-vaisselle (110) selon la revendication précédente, la commande (160) étant conçue pour comparer une durée d'une ouverture de la porte (158) à au moins une valeur de seuil et pour conclure à un enlèvement des articles à laver (116) hors de la chambre de nettoyage (114) en cas de dépassement de la valeur de seuil.

4. Lave-vaisselle (110) selon l'une des revendications précédentes, le lave-vaisselle (110) possédant au moins un capteur (156) destiné à détecter au moins un état des articles à laver (116) et/ou du lave-vaisselle (110), la commande (160) étant conçue pour permettre la nouvelle exécution de l'étape de rinçage du fait de l'actionnement de l'élément de contrôle (162) en fonction de l'état détecté.

5. Lave-vaisselle (110) selon l'une des revendications précédentes, la commande (160) étant conçue pour ne libérer l'élément de contrôle (162) pour l'actionnement qu'après l'exécution de l'étape de lavage.

6. Lave-vaisselle (110) selon l'une des revendications précédentes, l'élément de contrôle (162) étant conçu pour remplir au moins une fonction multiple.

7. Lave-vaisselle (110) selon la revendication précédente, la commande (160) étant conçue pour ne libérer la fonction de l'élément de contrôle (162), avec laquelle l'étape de rinçage est exécutée du fait de l'actionnement de l'élément de contrôle (162) après l'exécution au moins de l'étape de lavage du programme de nettoyage, que lorsqu'au moins une condition du lave-vaisselle (110) est remplie.

8. Lave-vaisselle (110) selon l'une des revendications précédentes, le lave-vaisselle (110) étant conçu pour communiquer à l'utilisateur au moins un signal qui indique que l'étape de rinçage est exécutable du fait d'un actionnement de l'élément de contrôle (162).

9. Lave-vaisselle (110) selon l'une des revendications précédentes, la commande (160) étant conçue pour exécuter, au choix, plusieurs programmes de nettoyage, au moins deux des programmes de nettoyage comportant respectivement l'au moins une étape de lavage et l'au moins une étape de rinçage, la commande (160) étant conçue de telle sorte que l'étape de rinçage d'au moins un premier des programmes de nettoyage est exécutable au moins une fois du fait d'un actionnement de l'élément de contrôle (162) après l'exécution de l'étape de lavage et la commande (160) étant en outre conçue de telle sorte que l'étape de rinçage d'au moins un deuxièmes programme des de nettoyage est exécutable indépendamment d'un actionnement de l'élément de contrôle (162) après l'exécution de l'étape de lavage.

10. Lave-vaisselle (110) selon l'une des revendications précédentes, le programme de nettoyage comportant en outre au moins une étape de séchage, la commande (160) étant conçue pour exécuter l'étape de séchage après l'exécution de l'étape de rinçage.

11. Lave-vaisselle (110) selon l'une des revendications précédentes, la commande (160) étant conçue pour exécuter le programme de nettoyage tout d'abord entièrement et y compris l'étape de lavage et l'étape de rinçage, la commande (160) étant en outre conçue pour reconnaître que les articles à laver (116) sont restés dans la chambre de nettoyage (114) pendant plus qu'une deuxième durée prédéfinie après l'exécution du programme de nettoyage et démarrer automatiquement une nouvelle étape de rinçage en cas de reconnaissance de cette condition.

12. Procédé pour nettoyer des articles à laver (116), comprenant l'application aux articles à laver (116) dans une chambre de nettoyage (114) d'au moins un liquide de lavage (130) et d'au moins un liquide de rinçage (148), au moins un programme de nettoyage étant exécuté, le programme de nettoyage comprenant au moins une étape de lavage, dans laquelle le liquide de lavage (130) est appliqué aux articles à laver (116), et au moins une étape de rinçage, dans laquelle le liquide de rinçage (148) est appliqué aux articles à laver (116), le procédé comprenant en outre une utilisation d'au moins un élément de contrôle (162) actionnable par un utilisateur, l'étape de rinçage est exécutable au moins une fois du fait d'un actionnement de l'élément de contrôle (162) après l'exécution au moins de l'étape de lavage du programme de nettoyage, le lave-vaisselle (110) selon l'une des revendications précédentes étant utilisé lors du procédé, le programme de nettoyage étant tout d'abord exécuté entièrement et en incluant l'étape de lavage et l'étape de rinçage et l'étape de rinçage pouvant ensuite être exécutée une nouvelle fois du fait de l'actionnement de l'élément de contrôle (162), il est détecté si les articles à laver (116) sont restés dans la chambre de nettoyage (114) pendant plus qu'une durée prédéfinie après l'exécution du programme de nettoyage, et un actionnement de l'élément de contrôle (162) en vue d'une nouvelle exécution de l'étape de rinçage n'étant rendue possible que lors de la détection de cette condition.
